# EUROPÄISCHE PATENTSCHRIFT

(11) **EP 2 802 544 B1**
(45) Veröffentlichungstag und Bekanntmachung des Hinweises auf die Patenterteilung: **11.11.2020**
(21) Anmeldenummer: 13701928.7
(22) Anmeldetag: 11.01.2013
(51) Int. Cl.: C03C 13/04, C03C 3/089, C03C 3/118, G02B 6/02, C03C 3/068, C03C 3/078, C03C 3/091, C03C 3/095, C03B 5/193, C03C 3/097, C03C 3/066

(54) **HOCHTRANSMITTIVE GLÄSER MIT HOHER SOLARISATIONSBESTÄNDIGKEIT, IHRE VERWENDUNG UND VERFAHREN ZU IHRER HERSTELLUNG**
HIGHLY TRANSMISSIVE GLASSES WITH HIGH SOLARISATION RESISTANCE, USE THEREOF AND METHOD FOR PRODUCTION THEREOF
VERRES HAUTEMENT TRANSMISSIFS À RÉSISTANCE ÉLEVÉE À LA SOLARISATION, LEUR UTILISATION ET PROCÉDÉ POUR LES PRODUIRE

(30) Priorität: 12.01.2012 DE 102012100233
(43) Veröffentlichungstag der Anmeldung: 19.11.2014
(60) Teilanmeldung: 20198922.5
(73) Patentinhaber: SCHOTT AG, 55122 Mainz (DE)
(72) Erfinder: RITTER, Simone, 55128 Mainz (DE); KOLBERG, Uwe, 55130 Mainz (DE); HANSEN, Stefanie, 55457 Gensingen (DE); WEINGÄRTNER, Thomas, 55435 Gau-Algesheim (DE); DE LUCA, Caroline, 55131 Mainz (DE); KIRSCH, Thomas, 55127 Mainz (DE); SKIBA, Peter-Franz, 55595 Rüdesheim (DE)
(74) Vertreter: Fuchs Patentanwälte Partnerschaft mbB
(86) Internationale Anmeldenummer: PCT/EP2013/050467
(87) Internationale Veröffentlichungsnummer: WO 2013/104748

(56) Entgegenhaltungen:
- EP-A1- 1 468 972
- DE-A1-102007 008 299
- US-A- 5 528 107
- US-A- 5 925 468
- US-A1- 2009 137 379
- US-A1- 2009 275 462
- US-A1- 2011 034 314
- BERMUTH K ET AL: "SOLARISATIONSERSCHEINUNGEN AN CER- UND ARSENHALTIGEN KALK-NATRONSILICATGLAESERN//SOLARIZATION PHENOMENA IN SODA-LIME-SILICA GLASSESCONTAINING CERIUM AND ARSENIC//PHENOMENES DE SOLARISATION DANS DES VERRES SILICOSODOCALCIQUES RENFERMANT DU CERIUM ET DE L'", GLASTECHNISCHE BERICHTE, VERLAG DER DEUTSCHEN GLASTECHNISCHEN GESELLSCHAFT, FRANKFURT, DE, Bd. 58, Nr. 3, 1. Januar 1985 (1985-01-01) , Seiten 52-58, XP009030460, ISSN: 0017-1085

## Beschreibung

Diese Erfindung betrifft Gläser, die hochtransparent sind und sehr gute Beständigkeit gegenüber Solarisation aufweisen, ein Verfahren zu deren Herstellung und ihre Verwendungen. Die Gläser dieser Erfindung werden vorzugsweise als Kernglas in einem Lichtleiter verwendet. Außerdem betrifft diese Erfindung einen Lichtleiter, der das erfindungsgemäße Glas als Kernglas und ein Mantelglas umfasst. Die Erfindung betrifft auch die Verwendung eines solchen Glases für die Bereiche Abbildung, Projektion, Telekommunikation, optische Nachrichtentechnik, Mobile Drive und Lasertechnologie sowie optische Elemente bzw. Vorformen (so genannte "Preformen") solcher optischen Elemente.

Faseroptische Lichtleiter finden zunehmend größere Verbreitung bei der Lichtübertragung in den unterschiedlichsten technischen und medizinischen Bereichen, z.B. in der allgemeinen Industrietechnik, der Beleuchtungs- und Verkehrstechnik, der Automobilindustrie, in der Medizintechnik wie Dentalmedizin oder Endoskopie usw. Aufgrund ihrer guten thermischen und chemischen Widerstandsfähigkeit werden in der Regel faseroptische Lichtleiter aus Glas eingesetzt, die aus zu Faserbündeln zusammengesetzten Einzelfasern bestehen. Die einzelne Lichtleitfaser leitet das Licht bekanntlich durch Totalreflexion. Die am weitesten verbreiteten Lichtleitfasern sind die Stufenindexfasern, die aus einem Kern aus Kernglas bestehen, wobei das Kernglas eine konstante Brechzahl über seinen Querschnitt besitzt. Das Kernglas ist von einem Mantel aus Mantelglas umgeben, das eine niedrigere Brechzahl als das Kernglas besitzt. An der Grenzfläche zwischen Kern- und Mantelglas tritt die Totalreflexion auf.

Die Lichtmenge, die in eine solche Faser eingekoppelt werden kann, ist bekanntlich proportional dem Quadrat der numerischen Apertur (NA) der Faser und der Querschnittsfläche des Faserkerns. Die NA entspricht dem Sinus des Winkelbereichs innerhalb dessen Licht von der Faser aufgenommen werden kann. Der Winkelbereich wird auch als Öffnungswinkel angegeben.

Neben der numerischen Apertur spielt natürlich auch die Dämpfung des Lichts in der Faser eine große Rolle. Deshalb können nur Kerngläser mit geringer Dämpfung Verwendung finden. Die Rohstoffe zum Erschmelzen solcher Kerngläser sind auf Grund ihrer hohen Reinheit recht teuer, was zu erheblichen Herstellungskosten solcher Fasern bzw. daraus hergestellter Lichtleiter führen kann. Weiterhin sollten toxische Bestandteile wie PbO, CdO, AS₂O₃, BeO, HgO, Tl₂O, ThO₂ aus Gründen des Umweltschutzes nicht mehr verwendet werden.

Neben der Lichtmenge, die ein faseroptischer Lichtleiter überträgt, spielt häufig auch eine farbsticharme Übertragung des Lichtes durch ihn eine bedeutende Rolle. Aufgrund der spektralen Transmissionsabhängigkeit des Kernglases, das die Fasern enthalten, erfolgt eine mehr oder weniger starke Farbverschiebung des Farbortes der eingekoppelten Lichtquelle, was sich meist in einem Gelbstich des aus dem Lichtleiter austretenden Lichtes bemerkbar macht. Dies wirkt sich überall dort störend aus, wo es auf farbneutrale Wiedergabe ankommt, z.B. in der medizinischen Endoskopie, bei fotographischer Bilddokumentation zur Differenzierung von z.B. gesundem und malignem Gewebe u.a.m.

Insbesondere bei mobilen Anwendungen ist weiterhin die Zuverlässigkeit der Faser von Bedeutung, d.h. die Alterungsbeständigkeit bei Temperaturwechselbeanspruchungen zwischen ca. -50°C und 110°C, die Beständigkeit gegenüber mechanischen Beanspruchungen, insbesondere die Schwingungsfestigkeit sowie die chemische Beständigkeit gegenüber Umwelteinflüssen und Reinigungsprozeduren. Dabei sind insbesondere die Klimabeständigkeit und die Beständigkeit des Kerns gegenüber alkalischen Lösungen von Bedeutung. Von Bedeutung ist auch die Dichte der Fasern, da diese einen direkten Einfluss auf die Nutzlast und den Treibstoffverbrauch eines Flugzeugs oder Automobils ausübt. Die Dichte einer Stufenindexfaser wird hauptsächlich durch die Dichte des Kernglases bestimmt.

Die Herstellung optischer Stufenfasern aus Mehrkomponentengläsern erfolgt entweder über das sogenannte Doppeltiegel- oder Stab-Rohr-Verfahren. In beiden Fällen werden Kern- und Mantelglas auf Temperaturen erhitzt, die einen Viskositätsbereich zwischen 10⁵ bis 10⁶ dPas entsprechen, und dabei zu einer Faser ausgezogen. Damit eine stabile Faser niedriger Dämpfung hergestellt werden kann, müssen zum einen das Kern- und Mantelglas in einer Reihe von Eigenschaften wie Viskositätsverlauf, thermischer Ausdehnung, Kristallisationsneigung u.a.m. kompatibel zueinander sein und zum anderen eine hohe Reinheit aufweisen, die, wie erwähnt, durch reine Rohstoffe und vor allem durch das Herstellungsverfahren gewährleistet wird. Insbesondere darf es in der Grenzfläche zwischen Faserkern und Fasermantel nicht zu Reaktionen zwischen Kern- und Mantelglas, z.B. Diffusion oder Kristallisation, kommen, was eine Totalreflexion des im Faserkern geführten Lichtes stört und dadurch die Dämpfung erhöht. Darüber hinaus wird auch die mechanische Festigkeit der Faser durch Kristallisation beeinträchtigt. Außerdem beeinflussen polyvalente Komponenten, die z.B. als Läutermittel bei der Glasherstellung fungieren oder als Verunreinigung ins Glas gelangen, die Änderung der spektralen Transmission im Einsatz mit den Strahlungsquellen. Dieser Effekt wird Solarisation genannt.

Weiterhin spielen die Schmelzaggregate insofern eine Rolle, als diese ebenfalls Kontamination verursachen können und diese sich negativ auf die Dämpfung und andere Eigenschaften auswirken. So erzeugt der Eintrag von Platin aus einem Pt-Aggregat erhöhte Dämpfungswerte im kurzwelligen Bereich. In einem Quarzaggregat kommt es hingegen zu einer erhöhten Auflösung des SiO₂-Aggregates. Der erhöhte SiO₂- und Verunreinigungseintrag (z.B. Fe) ins Glas führt zur Änderung der Eigenschaften wie z.B. des Brechungsindexes bzw. der Dämpfung. Die Einstellung dieser Parameter wird durch den so initialisierten instabileren Schmelzprozess erschwert.

Wie oben erwähnt, ist Solarisation die Verringerung der Transmission in verschiedenen Wellenlängenbereichen eines Glases nach Bestrahlung mit Licht, wie z.B. UV-Licht. Je länger ein Glas bestrahlt wird, desto stärker ist dieser Effekt ausgeprägt. Für Lichtleiter ist es essenziell, dass die Solarisation so gering wie möglich gehalten wird, weil sie häufigen intensiven Lichteinwirkungen ausgesetzt sind.

Solarisation kann gemessen werden, indem die Transmission eines Glases vor und nach einer Bestrahlung miteinander verglichen wird. Als Maß wird hier der Rückgang der Farbtemperatur im Vergleich zur Normlichtart D65 herangezogen.

Die Normlichtart D65 entspricht der Strahlungsverteilung eines planckschen Strahlers (schwarzer Körper) bei einer Temperatur von 6500 K. Dies entspricht in etwa der Strahlungsverteilung von Tageslicht an einem grauen, wolkenverhangenen Tag.

Der Farbort und die Farbtemperatur D65 werden aus dem Transmissionsspektrum des Lichtleiters errechnet. Zunächst wird das Spektrum des unbestrahlten Lichtleiters gemessen und die Farbtemperatur berechnet. Nach Bestrahlung mit Lichtquellen treten in den Kerngläsern Farbzentren und Defekte auf, welche die Transmission im UV- und VIS-Bereich abschwächen. Es wird die Farbtemperaturdifferenz zwischen unbestrahltem und bestrahltem Lichtleiter gebildet und als Maß für die Solarisation verwendet.

Mit der Bestrahlung des Glases nimmt die Transmission ab. Der Beobachter stellt eine teilweise deutliche Verschiebung der Farbwahrnehmung des transmittierten Lichts fest. Für den durchschnittlichen Beobachter ist ab einer Farbtemperaturänderung D65 von 150 K ein Unterschied erkennbar.

In der Praxis ist eine hohe Farbtemperatur für Lichtleiter erforderlich, um eine gute Farbwiedergabe und damit einen unverfälschten Farbeindruck des beleuchteten Objekts zu gewährleisten. Gerade Gläser, die als Kerngläser in Lichtleitern eingesetzt werden sollen, müssen eine geringe Dämpfung (in dB/km) aufweisen. Schließlich muss das Licht in den Lichtleitern über vergleichsweise weite Strecken möglichst absorptionsarm transportiert werden.

DE 102 45 987 B3 beschreibt bleihaltige Kerngläser, die sich durch eine niedrige Dämpfung und neutrale Farbübertragung auszeichnen und unter Verwendung umweltfreundlicher Rohstoffe hergestellt werden. Die Gläser enthalten kein Zinn. Würde dieses Glas einer Zinnläuterung bei den dann erforderlichen hohen Temperaturen unterzogen, würde sich die Dämpfung bei 900 bis 1100 nm stark erhöhen. Die niedrige Dämpfung lässt sich mit diesem Glas nur bei niedrigen Wellenlängen erzielen, im Bereich des IR würde sich eine starke Fe²⁺-Bande in etwa bei 1050 nm zeigen. Außerdem ist anzunehmen, dass das Glas stark zur Solarisation neigt, weil herkömmliche Läutermittel (Arsen- und Antimonoxid) verwendet werden. Diese Läutermittel sind weiterhin wegen ihrer toxischen Wirkung unerwünscht.

DE 10 2007 063 463 A1 beschreibt ein Kernglas für Lichtleiter. Das darin beschriebene Glas muss bei niedrigen Temperaturen geläutert werden, weil sich sonst ein zu hoher Platingehalt im Glas einstellt.

As₂O₃ und Sb₂O₃ werden als bevorzugte Läutermittel vorgestellt. Bei Verwendung dieser Läutermittel lässt sich eine hervorragende Solarisationsbeständigkeit nicht erzielen. Zinnläuterung wird nicht empfohlen.

DE 3026605 A1 beschreibt optische Gläser mit guter Beständigkeit. Allerdings werden dort große Mengen an CaO und MgO eingesetzt. Ferner kommt TiO₂ zum Einsatz, was die Dämpfung des Glases insbesondere im UV-Bereich stark beeinträchtigt. Daher werden mit dem dort beschriebenen Glas die erfindungsgemäßen Dämpfungswerte nicht erzielt, was für die dort beabsichtigte Anwendung auch gar nicht notwendig ist, weil dort sehr dünne Glasschichten hergestellt werden sollen und gerade keine Fasergläser.

JP 2009-203083 A beschreibt Glaszusammensetzungen mit geringem SiO₂-Gehalt. Damit ist eine für Fasergläser benötigte chemische Beständigkeit nicht zu erreichen. Außerdem werden viele brechwerterhöhende Komponenten eingesetzt, was aufgrund der darin immer enthaltenen Verunreinigung eine gute Dämpfung nicht ermöglicht.

JP 2009-263141 A lehrt optische Gläser, die TiO₂ enthalten müssen und mit klassischen Läutermitteln geläutert werden. Damit sind erfindungsgemäße Dämpfungswerte nicht zu erzielen

EP 1 468 972 A1 offenbart eine Glaszusammensetzung, die gute Dämpfungseigenschaften aufweist.

Im Stand der Technik sind durchaus Gläser bekannt, die ohne den Einsatz von PbO eine vernünftige Dämpfung ermöglichen. Diese Dämpfung bezieht sich aber im Regelfall nur auf Wellenlängenbereiche von ca. 400 bis 800 nm. Im IR-Wellenlängenbereich wurden keine entsprechenden Dämpfungen ermöglicht. Außerdem führt der Verzicht auf PbO als Glaskomponente im Stand der Technik dazu, dass die durch PbO vermittelte Solarisationsbeständigkeit stark abnimmt.

Es ist die Aufgabe der Erfindung, Gläser bereit zu stellen, die sehr solarisationsbeständig sind und eine geringe Dämpfung aufweisen. Die Gläser sollen als Kernglas in Lichtleitern eingesetzt werden können. Ferner sollen die Gläser in hoher Reinheit herstellbar sein und gute Beständigkeit, insbesondere gegenüber alkalischen Lösungen aufweisen. Die Beständigkeit gegenüber alkalischen Lösungen ist wichtig, damit die Gläser im medizinischen Bereich eingesetzt werden können. In diesem Bereich werden oft alkalische Reinigungsmittel eingesetzt.

Die Aufgabe wird durch die Gegenstände der Patentansprüche gelöst.

Die Aufgabe wird durch ein Glas gelöst, das SnO₂ umfasst und bei einer Wellenlänge von 1050 nm eine Dämpfung von bis zu 1300 dB/km aufweist. Bevorzugte Ausführungsformen weisen bei der genannten Wellenlänge sogar Dämpfungen von <1050 dB/km, <900 dB/km, <800 dB/km oder sogar <400 dB/km auf. Werte von <400 dB/km werden insbesondere von Gläsern mit einem Brechwert von <1,65 erreicht. Die Dämpfung wird nach DIN 58141-1 bestimmt. In einigen bevorzugten Ausführungsformen beträgt die genannte Dämpfung wenigstens 50 dB/km oder wenigstens 100 dB/km.

Diese niedrige Dämpfung im nahen IR-Bereich ist auf das sehr vorteilhafte Verhältnis von Fe²⁺/Fe³⁺ zurück zu führen, das bevorzugt einen möglichst geringen Zahlenwert aufweist. Das bedeutet, dass bevorzugt mehr Fe³⁺ als Fe²⁺ in dem Glas enthalten ist. Dieses vorteilhafte Verhältnis lässt sich im Glas kaum bestimmen, weil der Gehalt an Eisen eine Verunreinigung des Glases darstellt, die nur in sehr geringen Mengen vorhanden ist und sich damit unterhalb der Nachweisgrenze für Fe²⁺ und Fe³⁺ bewegt. Deshalb ist die Dämpfung ein Maß für die Konzentration von Eisen in allen Oxidationsstufen und für das Verhältnis Fe²⁺/Fe³⁺.

Eine geringe Verunreinigung mit Eisen lässt sich nicht verhindern. Es wird durch Rohstoffe, aber auch durch angrenzendes Material des Schmelzaggregates eingebracht. In bevorzugten Ausführungsformen beträgt die Dämpfung bei 1050 nm lediglich <300 dB/km, weiter bevorzugt <250 dB/km und weiter bevorzugt <180 dB/km und ganz besonders bevorzugt <150 dB/km.

Die Dämpfung bei 1050 nm ist also ein Maß für die Menge an Fe²⁺, die im Glas vorhanden ist. Bislang wurde versucht im Wege der Auswahl besonders reiner Rohstoffe eine Verminderung des Gehaltes an Fe²⁺ sicher zu stellen. Dies ist allerdings sehr teuer und aufwendig. Niedrige Valenzstufen von Elementen - und damit vom Eisen das Fe²⁺ - entstehen bei hohen Temperaturen in besonderem Maße.

Die Gläser dieser Erfindung werden unter Verwendung von SnO₂ geläutert. Im Gegensatz zu den herkömmlich als Läutermittel verwendeten Oxiden von Arsen und Antimon verursacht SnO₂ kaum Solarisation.

Die Gläser dieser Erfindung werden vorzugsweise nach dem Läutern gebubbelt, um einen Großteil des im Glas enthaltenen Fe²⁺ in Fe³⁺ zu überführen. Der Grund ist, dass sich das Gleichgewicht Fe²⁺/Fe³⁺ nach dem Läutern bei niedrigeren Temperaturen wieder zugunsten des Fe³⁺ verschiebt. Erst wenn das Glas erstarrt ist, wird das Gleichgewicht gleichsam eingefroren. Es wird erfindungsgemäß also bei vergleichsweise niedrigen Temperaturen gebubbelt.

Das erfindungsgemäße Glas umfasst Fe²⁺ und/oder Fe³⁺ vorzugsweise in einem Gehalt von 0 bis 10 ppm. Weiter bevorzugt umfasst das erfindungsgemäße Glas Eisen in einem Gehalt von vorzugsweise wenigstens 0,1 ppm und vorzugsweise höchstens 10 ppm (m/m). In bevorzugten Ausführungsformen beträgt der Eisengehalt höchstens 5 ppm, weiter bevorzugt höchstens 3 ppm und insbesondere höchstens 2 ppm. Gemeint ist der Gehalt aller Eisenspezies, also insbesondere Fe²⁺ und Fe³⁺. Sofern nichts anderes angegeben ist, beziehen sich Angaben in ppm und ppb stets auf Massenverhältnisse.

Die Komponente SnO₂ erlaubt es, auf die üblichen Läutermittel As₂O₃ und Sb₂O₃ zu verzichten. Bevorzugte Gläser dieser Erfindung sind daher frei von As₂O₃ und/oder Sb₂O₃. Neben ihrer toxischen Wirkung verstärken Arsen und Antimon die Solarisationsneigung eines Glases sehr stark. Der Verzicht auf Arsen und Antimon trägt dazu bei, dass das erfindungsgemäße Glas hervorragende Eigenschaften hinsichtlich der Solarisation aufweist und umweltunbedenklich ist.

Solarisation wird durch Defektzentren (u.a. Farbzentren) verursacht. SnO₂ bildet diese selbst nicht und animiert offenbar auch keine anderen Komponenten, solche auszubilden. SnO₂ fördert demnach sogenannte Sekundärreaktionen, die zu Defektzentren führen, nicht. Es ist diesbezüglich inaktiv.

Vorzugsweise beträgt der Gehalt an SnO₂ in den Gläsern dieser Erfindung wenigstens 0,01 Gew.-% weiter bevorzugt wenigstens 0,03 Gew.-% und noch weiter bevorzugt wenigstens 0,04 Gew.-%. SnO₂ dient als Läutermittel und verursacht im Vergleich zu anderen Läutermitteln keine merkliche oder kaum Solarisation. Mit zu geringen Mengen gelingt keine zufrieden stellende Läuterung. Sind die Mengen zu hoch, hat SnO₂ doch einen negativen Einfluss auf die Solarisationsneigung. Letzteres ist verursacht durch Einbringung von unerwünschten Verunreinigungen, wie zum Beispiel Eisenoxid, durch das SnO₂ und außerdem durch das erhöhte Redoxpotential mit diesen Verunreinigungen. Daher soll der Gehalt dieser Komponente im Glas vorzugsweise einen Wert von 1 Gew.-%, weiter bevorzugt 0,8 Gew.-%, besonders bevorzugt 0,4 Gew.-%, nicht übersteigen.

Das erfindungsgemäße Glas zeigt vorzugsweise selbst nach mehreren hundert Stunden Bestrahlung mit einer 300W Xenon-Hochdruck-Kurzbogenlampe keine bis nur sehr geringe Änderung der Dämpfung über den gesamten Wellenlängenbereich von >400 bis 1050 nm auf. Vorzugsweise beträgt die Dämpfung eines Lichtleiters mit 5 mm Durchmesser und 1000 mm Länge bei einer Wellenlänge von 1050 nm auch nach einer Bestrahlung von 450 Stunden mit einem transmittierten Lichtstrom von 1500 Im und/oder einer 300W Xenon-Hochdruck-Kurzbogenlampe weniger als 1300 dB/km, bevorzugt sogar weniger als 1050 dB/km, weiter bevorzugt weniger als 900 dB/km oder weniger als 800 dB/km. Besonders bevorzugt beträgt dieser Wert weniger als 400 dB/km.

Wenn es in dieser Beschreibung heißt, Gläser seien frei von einer Komponente oder enthalten eine gewisse Komponente nicht, so ist damit gemeint, dass diese Komponente allenfalls als Verunreinigung in den Gläsern vorliegen darf. Das bedeutet, dass sie nicht in wesentlichen Mengen zugesetzt wird. Nicht wesentliche Mengen sind erfindungsgemäß Mengen von weniger als 100 ppm, bevorzugt weniger als 50 ppm und am meisten bevorzugt weniger als 10 ppm.

Die Gläser dieser Erfindung sind vorzugsweise Fasergläser, insbesondere Kerngläser in Lichtleitern. Die Gläser sind daher vorzugsweise faserförmig, d.h. insbesondere wenigstens 1 m lang und haben vorzugsweise einen im Wesentlichen kreisrunden Querschnitt.

Das erfindungsgemäße Glas wird mit SnO₂ geläutert. SnO₂ ist ein Hochtemperaturläutermittel, das erst bei höheren Temperaturen den für die Läuterung benötigten Sauerstoff freigesetzt. Es müssen also höhere Temperaturen während der Läuterung herrschen als beim Läutern mit Arsen- oder Antimonoxiden. Hohe Temperaturen führen jedoch, wie oben erwähnt, zu Reduktion polyvalenter Ionen, wie zum Beispiel des Eisens, das zu Fe²⁺ reduziert wird. Diese Ionen werden durch Rohstoffe oder durch das Schmelzaggregat in das Glas eingebracht. Selbst bei Einsatz von hochreinen Rohstoffen ist eine Verunreinigung im ppb-Bereich vorhanden.

Die Verwendung des SnO₂ als Läutermittel und damit der mögliche Verzicht auf andere Läutermittel wie As₂O₃ und Sb₂O₃ ermöglicht die Herstellung eines Glases guter innerer Qualität (blasenarm) und insbesondere einer hohen Solarisationsbeständigkeit.

Die Maßnahmen dieser Erfindung bewirken, dass der durch die Solarisation bewirkte Farbtemperaturrückgang des Glases bezogen auf die Normlichtquelle D65 nach Bestrahlung bei den gewählten Testbedingungen kleiner als 150 K beträgt. Die Farbtemperatur D65 berechnet sich aus dem spektralen Transmissionsverlauf, der nach DIN 58141 Part 2 gemessen wird. Die gewählten Testbedingungen sind eine Lichtquelle Zeiss Superlux 301, das Leuchtmittel: Perkin Elmer 300BF, die Lichtleiterdimension mit einem Durchmesser von 5 mm und einer Länge von 1000 mm bei einer Umgebungstemperatur von 23°C.

Die Hochtemperaturläuterung wirkt sich bei Anwesenheit von Eisenoxid negativ auf die Dämpfung des Glases aus. Besonders für Anwendungen im IR-Bereich ist ein hoher Anteil von Fe²⁺ von Nachteil. Fe²⁺ absorbiert bei Wellenlängen von ca. 1050 nm und verschlechtert damit die Transmission bzw. Dämpfung der Faser im nahen IR.

Eine erfindungsgemäß bevorzugte Lösung der durch Fe²⁺ vermittelten Probleme ist das Bubbeln des Glases mit einem oxidierenden Gas nach dem Läutern. Das Bubbeln findet vorzugsweise bei Temperaturen von höchstens 1550°C und insbesondere höchstens 1480°C statt. Für einige Gläser, insbesondere solche mit einem hohen Brechungsindex von mehr als 1,65 gilt, dass vorsichtshalber eine niedrigere Temperatur von weniger als 1300°C gewählt werden sollte. Der Grund ist, dass diejenigen Komponenten, welche den Brechwert erhöhen nicht in der höchsten Reinheit erhältlich sind. Zu hohe Temperaturen machen den gewünschten Effekt zunichte. Das oxidierende Gas ist vorzugsweise sauerstoffhaltig. Vorzugsweise besteht das oxidierende Gas im Wesentlichen aus Sauerstoff. Alternativ kann Ozon eingesetzt werden.

Es ist erfindungsgemäß nicht erforderlich, dass während der Läuterung gebubbelt wird. Schließlich wird SnO₂ als chemisches Läutermittel eingesetzt. Bevorzugt wird daher während der Läuterung nicht gebubbelt.

Es ist während des Bubbelns erforderlich, dass die Viskosität des Glases in einem für das Bubbeln geeigneten Bereich liegt. Daher soll das Glas bei den Temperaturen, bei denen gebubbelt wird, eine Viskosität von 10^{0,9} bis ≤10^{2,2} dPas aufweisen. Insbesondere beträgt die Viskosität des Glases bei einer Temperatur von 1300°C höchstens 10² dPas.

Die folgende Tabelle zeigt beispielhaft an zwei erfindungsgemäßen Gläsern (weiter unten beschriebene Beispielgläser 7 und 8) sowie dem nicht erfindungsgemäßen Glas 21, wie sich die Viskosität der Gläser in Abhängigkeit der Temperatur ändert, wenn die Zusammensetzungen eingesetzt werden.

| **Bsp. 7** | | **Bsp. 8** | | | **Bsp. 21** |
|---|---|---|---|---|---|
| T(°C) | Viskosität log [dPas] | T(°C) | Viskosität log [dPas] | T(°C) | Viskosität log [dPas] |
| 1200 | 2,01 | 1200 | 2,18 | 1080 | 2,14 |
| 1300 | 1,51 | 1300 | 1,70 | 1100 | 1,95 |
| 1350 | 1,30 | 1350 | 1,50 | 1200 | 1,14 |
| 1400 | 1,10 | 1400 | 1,31 | 1240 | 0,86 |
| 1450 | 0,93 | 1450 | 1,14 | | |

Das Bubbling findet vorzugsweise bei Temperaturen von wenigstens 1000°C, bevorzugt wenigstens 1100°C, mehr bevorzugt 1200°C und besonders bevorzugt wenigstens 1350°C statt. Die Temperaturen sollen vorzugsweise einen Wert von 1550°C, weiter bevorzugt einen Wert von 1500°C und am meisten bevorzugt einen Wert von 1480°C, insbesondere 1400°C, nicht überschreiten. Höhere Temperaturen führen zu geringerer Viskosität, aber auch zur Verschiebung des Gleichgewichts von polyvalenten Komponenten hin zu niedrigeren Wertigkeiten. Ist die Viskosität beim Bubbling zu hoch, können die Blasen in der Glasschmelze nicht oder nur schlecht aufsteigen und es kommt zu unerwünschter Schaumbildung. Ist die Viskosität zu gering, so ist die Verweilzeit der Blasen in der Schmelze zu gering. Außerdem bilden sich zu große Blasen und damit eine zu geringe Blasenoberfläche, die einen zu geringen Austausch des Sauerstoffs zur Folge hat. Da für einen effizienten Gasaustausch zwischen Schmelze und Blasen eine große Grenzfläche erforderlich ist, sind zu große Blasen nicht erwünscht. Erfindungsgemäß bevorzugte Blasengrößen liegen in einem Bereich von ca. 10 mm bis ca. 100 mm Durchmesser. Bei nicht exakt kugelförmigen Blasen ist der kleinste Durchmesser der Blasen gemeint.

Die Viskosität eines Glases bzw. einer Glasschmelze wird erfindungsgemäß mit Hilfe eines Rührviskosimeters bestimmt.

Es wird beispielsweise in einem diskontinuierlichen Aggregat bis 4 L Schmelzvolumen vorzugsweise für wenigstens 20 Minuten gebubbelt. Zwar kann unter Umständen - abhängig vom jeweiligen Glas und der Menge an Verunreinigungen - auch eine kürzere Bubblingzeit ausreichen, doch wird in den meisten Fällen erst nach etwa 20 Minuten eine deutliche Verbesserung der Dämpfung erzielt. Die Bubblingzeit beträgt also vorzugsweise wenigstens 10 Minuten, weiter bevorzugt wenigstens 15 Minuten, noch weiter bevorzugt wenigstens 20 Minuten und besonders bevorzugt wenigstens 25 Minuten.

Der Fachmann wird bei einem kontinuierlichen Schmelzaggregat mit einem Durchsatz von 500 bis 1000 g/min erkennen, wie viel Bubblingzeit erforderlich ist, um ein optimales Dämpfungsergebnis zu erzielen.

Das oxidierende Gas bewirkt bei diesen niedrigen Temperaturen die Oxidation von polyvalenten Ionen. Im Falle des Eisens wird Fe²⁺ zu Fe³⁺ oxidiert. Die Absorption von Fe²⁺ bei ca. 1050 nm wird dadurch verringert. Die Bande des dreiwertigen Eisens bei ca. 350 nm wird dadurch stärker, ist jedoch wegen des geringeren Absorptionskoeffizienten weniger ausgeprägt und aufgrund der Lage bei 350 nm für die Anwendung nicht störend. Der Nachteil der Reduktion polyvalenter Ionen bei den hohen Läutertemperaturen wird also durch ein Bubbling nach dem Läutern wieder ausgeglichen. Eine ausgewogene Einstellung der Viskosität führt zu Gläsern, die trotz des weiteren Bubblingschrittes hinsichtlich der im Glas vorhandenen Blasen sehr gute Eigenschaften haben.

Durch das Bubbling nach dem Läutern stellen sich sehr vorteilhafte Verhältnisse von Fe²⁺/Fe³⁺ und Sn²⁺/Sn⁴⁺ im Glas ein, die dazu führen, dass die Dämpfung des Glases sehr niedrig ist. Diese Verhältnisse lassen sich analytisch nicht zufriedenstellend und nur mit großem Aufwand bestimmen (O. Corumluoglu et al. "Determination of ferrous iron and total iron in glass by a colorimetric method", Glass Technol, 1999, 40(1), 24-8). Daher muss als Surrogatparameter auf die Dämpfung zurückgegriffen werden.

In dem erfindungsgemäßen Glassystem besteht eine gute Korrelation zwischen den Verhältnissen von Fe²⁺/Fe³⁺ und Sn²⁺/Sn⁴⁺ einerseits und der Dämpfung des Glases andererseits. Die vorliegenden Eisenspezies können nicht analytisch quantifiziert werden. Das Verhältnis von Fe²⁺/Fe³⁺ wird erfindungsgemäß so eingestellt, dass die erfindungsgemäßen Dämpfungswerte erzielt werden. Die dafür erforderlichen Maßnahmen sind hierin ausführlich beschrieben.

Die Differenz der Dämpfungen des Glases bei 900 nm und 700 nm (D900-D700) beträgt erfindungsgemäß bevorzugt weniger als 500 dB/km und weiter bevorzugt weniger als 400 dB/km und besonders bevorzugt weniger als 300 dB/km. Einige Gläser erreichen hier sogar Werte von weniger als 150 dB/km, weiter bevorzugt weniger als 100 dB/km oder weniger als 50 dB/km. Diese Differenz (relative Werte) ist ein Merkmal guter IR-Qualität der Gläser, ohne eine Verfälschung durch den manchmal vorhandenen Offset der Absolutmessungen. Eine flache Dämpfungskurve über den gesamten interessanten Wellenlängenbereich ist sehr vorteilhaft für die spätere Anwendung.

Es ist erstaunlich, dass durch das Bubbeln nach dem Läutern ein so starker Effekt hinsichtlich der Dämpfung im IR-Bereich eintritt.

Die Gläser dieser Erfindung weisen wenigstens 23 Gew.-%, bevorzugt wenigstens 24 Gew.-% und besonders bevorzugt wenigstens 25 Gew.-% oder sogar wenigstens 26 Gew.-% SiO₂ auf. In einer besonderen Ausführungsform können die Gläser sogar mindestens 28,3 Gew.-% SiO₂ enthalten, ganz besonders bevorzugt mindestens 34 Gew.-% SiO₂. In einigen bevorzugten Ausführungsformen umfassen die Gläser sogar wenigstens 35 Gew.-% SiO₂, weiter bevorzugt wenigstens 42 Gew.-%.

SiO₂ ist ein Glasbildner. Zu geringe Mengen dieser Komponente führen zu instabilen Gläsern. Insbesondere die chemische Beständigkeit und ganz besonders die Säureresistenz sind bei zu geringen Gehalten an SiO₂ beeinträchtigt.

Allerdings erhöht die Komponente SiO₂ die Verarbeitungstemperaturen der Gläser. Hohe Verarbeitungstemperaturen haben Nachteile: Die sehr heißen Schmelzen greifen Materialien, mit denen sie in Kontakt kommen, stärker an. Daher haben die verwendeten Materialien eine geringere Lebensdauer. Außerdem werden größere Mengen an Verunreinigungen in das Glas eingebracht, was wiederum zu unerwünschten Einflüssen auf die Transmission und damit die Dämpfung und die Solarisation führen kann. Desweiteren kommt es bei zu hohen Anteilen an SiO₂ zur Absenkung der numerischen Apertur (N_{A}). Damit die Verarbeitungstemperaturen nicht zu hoch werden, ist der Gehalt an SiO₂ auf maximal 62,1 Gew.-% begrenzt. Bevorzugt beträgt der Gehalt an SiO₂ im erfindungsgemäßen Glas höchstens 55 Gew.-% und besonders bevorzugt höchstens 53 Gew.-%. In besonders bevorzugten Ausführungsformen umfasst das Glas höchstens 51,8 Gew.-% SiO₂ und noch weiter bevorzugt nur höchstens 50 Gew.-% SiO₂. In einer besonders bevorzugten Ausführungsform weisen die Gläser dieser Erfindung eine stark begrenzte Menge an SiO₂ auf, um einen hohen Brechwert realisieren zu können. Diese Gläser weisen nur höchstens 35 Gew.-%, weiter bevorzugt höchstens 33 Gew.-%, mehr bevorzugt höchstens 32 Gew.-% und besonders bevorzugt höchstens 31 Gew.-% SiO₂ auf.

Das erfindungsgemäße Glas enthält bis zu 10 Gew.-%, bevorzugt bis zu 6 Gew.-%, noch weiter bevorzugt bis zu 2,8 Gew.-% und besonders bevorzugt höchstens 1,5 Gew.-% Al₂O₃. Der Al₂O₃-Gehalt führt zur Erhöhung der chemischen Resistenz der silikatischen Grundmatrix. Zu hohe Gehalte an Al₂O₃ führen zu einer starken Erhöhung des Schmelzpunktes der Gläser und können somit zu einem erhöhten Produktionsaufwand führen. Besonders in Gläsern, die bereits vermittels anderer Glasbildner ausreichende chemische Resistenz aufweisen, kann der Gehalt an Al₂O₃ erfindungsgemäß bevorzugt auf höchstens 1 Gew.-%, weiter bevorzugt höchstens 0,5 Gew.-% und ganz besonders bevorzugt auf höchstens 0,3 Gew.-% beschränkt werden. In besonders bevorzugten Ausführungsformen kann sogar auf Al₂O₃ verzichtet werden.

Auch B₂O₃ kann im erfindungsgemäßen Glas enthalten sein. In einer bevorzugten Ausführungsform sind wenigstens 0,1 Gew.-%, weiter bevorzugt wenigstens 0,5 Gew.-% und besonders bevorzugt wenigstens 6 Gew.-% B₂O₃ enthalten. Diese Komponente senkt die Viskosität des Glases und somit Schmelz-, Läuter- und Verarbeitungstemperaturen. Da zu hohe Gehalte an B₂O₃ allerdings die chemische Beständigkeit, insbesondere gegenüber alkalihaltigen Medien, herabsetzen können, beträgt der Gehalt an B₂O₃ höchstens 24 Gew.-%. Weiter bevorzugt sind höchstens 15 Gew.-%, weiter bevorzugt höchstens 5,1 Gew.-% oder <5 Gew.-%, noch mehr bevorzugt höchstens 4 Gew.-%, mehr bevorzugt höchstens 3,5 Gew.-% und ferner bevorzugt höchstens 3 Gew.-%, insbesondere höchstens 1,5 Gew.-% B₂O₃ im Glas enthalten. In einigen bevorzugten Fällen enthält das Glas weniger als 1 Gew.-% B₂O₃.

Bevorzugt ist der SiO₂-Gehalt im Glas höher als der B₂O₃-Gehalt. Dadurch wird eine hinreichende chemische Resistenz ermöglicht. Vorzugsweise sollte der SiO₂-Gehalt sogar mindestens doppelt so hoch sein wie der B₂O₃-Gehalt. Durch das richtige Verhältnis der Komponenten B₂O₃ und SiO₂ wird u.a. die erforderliche Leitfähigkeit eingestellt, damit das Glas in einem Hochfrequenzaggregat beheizt werden kann. In den Ausführungsformen, die B₂O₃ enthalten beträgt das Masseverhältnis von SiO₂ zu B₂O₃ bevorzugt mehr als 5, weiter bevorzugt mehr als 6, mehr bevorzugt mehr als 7 und besonders bevorzugt mehr als 8. Dieses Masseverhältnis sollte allerdings nicht zu hoch gewählt werden, insbesondere sollten Werte von 50, bevorzugt 40, weiter bevorzugt 30 und besonders bevorzugt 15 nicht überschritten werden.

B₂O₃ verhält sich aggressiv gegenüber bestimmten Schmelzaggregaten und erfordert daher besondere Vorsicht im Umgang. Daher ist es erfindungsgemäß bevorzugt, die erforderlichen Viskositätseigenschaften des Glases ohne den Einsatz von B₂O₃ zu gewährleisten. In einigen Ausführungsformen ist das erfindungsgemäße Glas daher frei von B₂O₃.

Der Gesamtgehalt an SiO₂, Al₂O₃ und B₂O₃ beträgt bevorzugt höchstens 70 Gew.-%, weiter bevorzugt höchstens 65 Gew.-%, mehr bevorzugt höchstens 60 Gew.-% und besonders bevorzugt höchstens 50 Gew.-% oder höchstens 40 Gew.-%, um noch eine gute Verarbeitbarkeit des Glases zu ermöglichen bei ausreichender chemischer Resistenz. Zu diesem Zweck soll der Gesamtgehalt dieser Oxide vorzugsweise wenigstens 25 Gew.-%, weiter bevorzugt wenigstens 27 Gew.-%, mehr bevorzugt wenigstens 30 Gew.-%, besonders bevorzugt wenigstens 40 Gew.-% und mehr bevorzugt wenigstens 41 Gew.-% betragen.

Um die chemische Resistenz zu verbessern, kann auch Ta₂O₅ zugesetzt werden, insbesondere in Mengen von wenigstens 0,4 Gew.-%, weiter bevorzugt wenigstens 1,2 Gew.-% und besonders bevorzugt wenigstens 3,5 Gew.-%. Allerdings sollte der Gehalt dieser Komponente einen Wert von 22 Gew.-%, bevorzugt von 10 Gew.-%, mehr bevorzugt von 9 Gew.-%, besonders bevorzugt 7 Gew.-% und ganz besonders bevorzugt 6 Gew.-% nicht überschreiten.

Das Glas dieser Erfindung umfasst wenigstens ein Alkalimetalloxid. Die Alkalimetalloxide wirken als Netzwerkwandler und sind für die Herstellung des Glases in konventionellen Wannen bei moderaten Temperaturen notwendig. Es werden wenigstens 5 Gew.-% eingesetzt, bevorzugt wenigstens 6 Gew.-%, besonders bevorzugt wenigstens 9 Gew.-%. Unter Alkalimetalloxiden werden die Oxide von Li, Na, K, Rb und Cs verstanden. In weiter bevorzugten Ausführungsformen umfassen die Alkalioxide nur Oxide von Li, Na und K.

Allerdings beeinträchtigen Alkalimetalloxide, wenn sie in zu großen Mengen eingesetzt werden, die chemische Beständigkeit des Glases. Außerdem erhöhen Alkalimetalloxide den Ausdehnungskoeffizienten, wodurch Risse im Glas bei der Heißformgebung entstehen können. Der Anteil der Alkalimetalloxide im Glas dieser Erfindung ist daher auf höchstens 20 Gew.-%, bevorzugt höchstens 18 Gew.-%, mehr bevorzugt höchstens 15 Gew.-%, insbesondere höchstens 10 Gew.-% und besonders bevorzugt höchstens 5 Gew.-% begrenzt.

Zur Anwendung kommen vorzugsweise die Alkalimetalloxide Li₂O, Na₂O und K₂O. Rb₂O und/oder Cs₂O können ebenfalls eingesetzt werden. Ihr Anteil ist aber vorzugsweise auf Mengen von jeweils bis zu 21 Gew.-%, vorzugsweise bis zu 15 Gew.-% und insbesondere bis zu 2 Gew.-%, bevorzugt bis zu 1,5 Gew.-% beschränkt. Bevorzugt umfasst das erfindungsgemäße Glas eine Mischung aus Li₂O, Na₂O und K₂O und ist frei von weiteren Alkalimetalloxiden.

Das Verhältnis der Alkalimetalloxide Li₂O, Na₂O und K₂O zueinander und zu den Alkalimetalloxiden im Mantelglas ist für die Verwendung des erfindungsgemäßen Glases als Kernglas von Bedeutung. Während des Faserziehprozesses kommt es nämlich zu Interdiffusionsprozessen der mobilsten Ionen, also hauptsächlich der Alkaliionen. Bis zu einem gewissen Ausmaß sind diese Vorgänge erwünscht, da sie zu einer chemischen Verbindung zwischen Kern- und Mantelglas führen und somit erst die Stabilität der Faser gewährleisten. Wenn diese Vorgänge zu stark werden oder Ionen diffundieren, die durch Verarmung oder Anreicherung im Kern- oder Mantelglas zur Ausbildung von kristallinen Phasen beitragen, werden diese Diffusionsprozesse kontraproduktiv. Somit sollten Konzentrationsgradienten zwischen Kern- und Mantelglas zwar vorhanden sein aber andererseits auch nicht zu groß werden.

Der Gehalt an Na₂O beträgt bis zu 18,5 Gew.-%, weiter bevorzugt bis zu 15 Gew.-%, besonders bevorzugt bis zu 14 Gew.-%, mehr bevorzugt bis zu 9 Gew.-%, insbesondere <3 Gew.-%, weiter bevorzugt höchstens 2 Gew.-% und besonders bevorzugt höchstens 1 Gew.-%. Der Gehalt an dieser Komponente kann in einer besonderen Ausführungsform sogar wenigstens 1 Gew.-%, bevorzugt wenigstens 2 Gew.-%, mehr bevorzugt 4 Gew.-% und besonders bevorzugt wenigstens 5 Gew.-% betragen. In einer Ausführungsform sind die Gläser sogar frei von Na₂O.

Der Gehalt an K₂O kann bis zu 25,7 Gew.-% betragen. Besonders bevorzugt ist K₂O jedoch in einem geringeren Anteil im Vergleich zu Na₂O im Glas enthalten. Besonders vorteilhaft ist ein K₂O-Gehalt von höchstens 15 Gew.-%, weiter bevorzugt höchstens 12 Gew.-%, mehr bevorzugt höchstens 6,5 Gew.-%, insbesondere höchstens 3 Gew.-% oder höchstens 2 Gew.-% und besonders bevorzugt höchstens 1 Gew.-%. Der Gehalt an dieser Komponente sollte vorzugsweise wenigstens 0,9 Gew.-%, weiter bevorzugt wenigstens 2,9 Gew.-% und besonders bevorzugt wenigstens .-% betragen. Besondere Ausführungsformen sind allerdings frei von K₂O.

Besonderes Augenmerk muss auch auf den Anteil des Li₂O gelegt werden. Das Lithiumion stellt die mobilste Komponente des Systems dar und trägt außerdem, insbesondere bei Anwesenheit von Al₂O₃ und ZrO₂ als Keimbildner zur Bildung von kristallinen Phasen wie LiAlO₂ bei. ZrO₂ ist zur Einstellung der optischen Eigenschaften in vielen Gläsern unverzichtbar. Da viele Mantelgläser Al₂O₃ enthalten, wäre es eigentlich nahe liegend, auf Li₂O in jedem Kernglas ganz zu verzichten, um die Gefahr durch Kristallisationseffekte an der Kern-Mantelgrenzfläche zu minimieren. Jedoch gibt es auch eine Anzahl von Mantelgläsern, die selbst Li₂O enthalten.

Wenn im Kernglas gar kein Li₂O enthalten ist, kommt es bei Li₂O-haltigen Mantelgläsern zur Eindiffusion von Li₂O aus dem Mantelglas, was die optische Qualität der Kern-Mantelgrenzfläche negativ beeinflussen kann. Daher enthält das Glas dieser Erfindung vorzugsweise Li₂O.

Um das Glas dieser Erfindung mit verschiedenen Mantelgläsern kombinieren zu können und daraus eine Vielzahl verschiedener Produkte herstellen zu können, hat es sich als sinnvoll herausgestellt, in bevorzugten Ausführungsformen einen Li₂O-Anteil im erfindungsgemäßen Glas vorzusehen. Dieser Anteil sollte hoch genug sein, um die negativen Effekte durch Eindiffusion aus Li₂O-haltigen Mantelgläsern zu unterdrücken und niedrig genug sein, um Kristallisationseffekte in Li₂O-freien, Al₂O₃-haltigen Mantelgläsern zu vermeiden. Wie die Erfinder durch intensive Bemühungen herausgefunden haben, wird dieses Ziel durch einen Li₂O-Anteil bevorzugt von wenigstens 0,2 Gew.-%, weiter bevorzugt wenigstens 0,4 Gew.-% oder wenigstens 0,5 Gew.-% bis 10 Gew.-%, weiter bevorzugt von 0,8 bis 5 Gew.-% oder <3 Gew.-% und besonders bevorzugt von 0,6 bis 2 Gew.-% oder sogar nur bis zu 1 Gew.-% erreicht.

Das Glas dieser Erfindung enthält vorzugsweise ZnO in einem Gehalt von 3 bis zu 40 Gew.-%, insbesondere bis zu 38 Gew.-%. ZnO wirkt als Netzwerkwandler und dient außerdem zur Einstellung der optischen Eigenschaften des Glases. Sein Gehalt sollte besonders bevorzugt auf höchstens 28 Gew.-%, weiter bevorzugt auf höchstens 25 Gew.-%, weiter bevorzugt höchstens 24 Gew.-%, mehr bevorzugt höchstens 23 Gew.-% und besonders bevorzugt höchstens 22 Gew.-%, begrenzt sein. ZnO ist in einem Gehalt von wenigstens 3 Gew.-%, besonders bevorzugt wenigstens 8 Gew.-%, wenigstens 10 Gew.-% oder wenigstens 11 Gew.-% im Glas enthalten. Andere Ausführungsformen enthalten mehr als 12 Gew.-%, insbesondere wenigstens 13 Gew.-% und mehr bevorzugt wenigstens 16 Gew.-% im Glas. Besonders bevorzugte Ausführungsformen enthalten sogar wenigstens 20 Gew.-%.

Als Netzwerkwandler bewirkt das ZnO im Gegensatz zu den Alkalioxiden, die eine mehr oder weniger konstante Verschiebung der Viskositätskurve über alle Temperaturen bewirken, ein stärkeres Absinken bei hohen Temperaturen und ein schwächeres Absinken oder sogar Ansteigen bei tieferen Temperaturen. Dies ist ein sehr wünschenswertes Verhalten, da eine niedrige Viskosität beim Einschmelzen und Läutern bei möglichst niedrigen Temperaturen vorliegen soll. Dies minimiert den Angriff auf das Wannenmaterial und verhindert einen Gelbstich beispielsweise durch Lösen von Platin aus dem Equipment der Wanne.

Das Glas dieser Erfindung kann BaO enthalten. Der Gehalt an BaO soll höchstens 57,8 Gew.-%, bevorzugt höchstens 42 Gew.-%, und besonders bevorzugt höchstens 30 Gew.-% betragen und weiter bevorzugt höchstens 12,8 Gew.-%. In einer anderen besonderen Ausführungsform enthält das Glas bis zu 35 Gew.-% weiter bevorzugt bis 34 Gew.-%, mehr bevorzugt bis 33 Gew.-% und besonderes bevorzugt bis 32 Gew.-%. In bevorzugten Ausführungsformen liegt der Gehalt dieser Komponente bei wenigstens 0,5 Gew.-%, bevorzugt wenigstens 0,8 Gew.-% und weiter bevorzugt wenigstens 9 Gew.-%. Einige bevorzugte Ausführungsformen enthalten wenigstens 5 Gew.-%, weiter bevorzugt wenigstens 7 Gew.-%, mehr bevorzugt wenigstens 9 Gew.-% und besonders bevorzugt wenigstens 11 Gew.-% BaO.

Ähnlich wie ZnO erhöht BaO den Brechwert des Glases und trägt aufgrund seiner hohen Basizität ähnlich wie die Alkalioxide zur Auflösung saurer Komponenten wie SiO₂ und ZrO₂ bei. Jedoch neigt BaO stärker zu Kristallisation als ZnO und sollte daher nur in kleineren Mengen eingesetzt werden. Ebenso ist ZnO aus Gründen der Reinheit und Eigenabsorption zu bevorzugen. In einer besonderen Ausführungsform enthält das Glas daher nur bis zu 9,2 Gew.-% BaO.

Es hat sich ferner als günstig für die Verarbeitbarkeit des Glases in Hochfrequenzaggregaten erwiesen, das Masseverhältnis von BaO zu ZnO in Ausführungsformen, die ZnO enthalten, auf vorzugsweise wenigstens 0,01, weiter bevorzugt wenigstens 0,2, mehr bevorzugt wenigstens 0,3 und besonders bevorzugt wenigstens 0,5 einzustellen. Dabei sollte dieses Masseverhältnis vorzugsweise einen Wert von 22, weiter bevorzugt 3 und besonders bevorzugt 2,5 nicht überschreiten.

BaO kann komplett oder teilweise durch SrO substituiert werden. SrO kann in Mengen von 0 bis 24,4 Gew.-%, bevorzugt bis 9 Gew.-%, besonders bevorzugt bis zu 8 Gew.-%, ganz besonders bevorzugt bis zu 6 Gew.-%, weiter bevorzugt bis zu 4 Gew.-% enthalten sein. Jedoch ergeben sich dadurch in vielen Gläsern keine deutlichen Vorteile und SrO erhöht nicht im gleichen Maße den Brechwert wie BaO. Deshalb kommt es in bevorzugten Ausführungsformen bis zu 1 Gew.-%, weiter bevorzugt bis zu 0,8 Gew.-%, besonders bevorzugt bis zu 0,5 Gew.-% zum Einsatz und weiter bevorzugt nicht zum Einsatz.

CaO und/oder MgO können ebenfalls einen Teil des BaO substituieren, haben jedoch eher negative Auswirkungen auf Brechwert, Säurebeständigkeit und Verunreinigung, so dass bevorzugt auf ihre Verwendung verzichtet wird.

MgO ist in einem Gehalt von 0 bis 8 Gew.-%, weiter bevorzugt 0 Gew.-% bis 6 Gew.-% und noch weiter bevorzugt 0 Gew.-% bis 3 Gew.-% enthalten. CaO kann in Mengen von bis zu 8 Gew.-%, bevorzugt lediglich bis zu 6 Gew.-% oder bis zu 3 Gew.-% und weiter bevorzugt lediglich bis zu 2 Gew.-% oder bis zu 1 Gew.-%, vorliegen. Besonders bevorzugt ist das erfindungsgemäße Glas frei von zumindest einem oder mehreren der Erdalkalioxide ausgewählt aus CaO, MgO, BaO und SrO. Besonders bevorzugt ist das erfindungsgemäße Glas frei von MgO, da dieses aufgrund der höheren lonenbeweglichkeit gegenüber den anderen Erdalkalioxiden zur Ausbildung unerwünschter Reaktionen mit einem Mantelglas neigen kann, was wiederrum die Transmission negativ beeinflussen könnte.

Um die guten Eigenschaften des Glases zu erhalten, soll die Summe der Erdalkalioxide vorzugsweise einen Wert von 42 Gew.-%, vorzugsweise von 35 Gew.-% nicht überschreiten. In einer bevorzugten Ausführungsform liegt die Summe aus Erdalkaligehalt (RO) und ZnO zwischen 20 Gew.-% und 55 Gew.-%, besonders bevorzugt 20 Gew.-% bis 53 Gew.-% und weiter bevorzugt zwischen 21 Gew.-% bis 52 Gew.-%. Weitere bevorzugte Anteilsbereiche dieser Komponenten sind 33 bis 48 Gew.-%, 33 bis 46 Gew.-%, 34 bis 45 Gew.-% und 35 bis 44 Gew.-%.

Zu den Erdalkalioxiden kann also zusammenfassend gesagt werden, dass es von den übrigen Komponenten im Glas abhängt, welche Erdalkalioxide in welchen Mengen eingesetzt werden sollten.

Durch die bisher erwähnten Komponenten wird das Grundglassystem definiert. Zur Erreichung eines hohen Brechwertes bei gleichzeitig guter chemischer Beständigkeit und geringer Kristallisationsneigung reichen diese Komponenten jedoch oft nicht aus und es müssen weitere Hilfsoxide herangezogen werden. Hierbei sind insbesondere La₂O₃, ZrO₂ und/oder HfO₂ bevorzugt. Auch Ta₂O₅ kann erfindungsgemäß zugesetzt werden.

Bevorzugt enthält das erfindungsgemäße Glas La₂O₃. Diese Komponente erhöht den Brechwert des Glases stark. Sie wird vorzugsweise in einem Anteil von 0 bis 16,5 Gew.-%, bevorzugt 1,6 Gew.-% bis 14,5 Gew.-% und weiter bevorzugt 4 Gew.-% bis 12 Gew.-% eingesetzt. In bevorzugten Ausführungsformen beträgt der Gehalt an dieser Komponente wenigstens 5 Gew.-%, weiter bevorzugt wenigstens 9 Gew.-% , mehr bevorzugt wenigstens 10 Gew.-% oder wenigstens 12 Gew.-%, noch mehr bevorzugt wenigstens 13 Gew.-% oder wenigstens 14 Gew.-%. Wird La₂O₃ in geringen Mengen verwendet, ist die erzielte Steigerung des Brechwerts nur gering ausgeprägt. Wird diese Komponente in zu großen Mengen eingesetzt, steigt die Neigung zu Kristallisation sehr stark an, so dass das Glas nicht mehr für alle Fasertypen verwendet werden kann. Außerdem ist La₂O₃ sehr aggressiv gegenüber SiO₂-haltigen Feuerfestmaterialien. Daher ist der Gehalt an La₂O₃ auf höchstens 25 Gew.-%, bevorzugt höchstens 24 Gew.-% oder höchstens 23 Gew.-%, insbesondere höchstens 21 Gew.-% beschränkt.

La₂O₃ kann durch äquivalente Mengen Lu₂O₃ ersetzt werden. Da dieses Oxid jedoch deutlich weniger rein ist, wird im Allgemeinen darauf verzichtet. Die Gläser dieser Erfindung sind vorzugsweise frei von Sc₂O₃. Außerdem sind die Gläser vorzugsweise frei von Gd₂O₃, da diese Komponente eine schwache Bande bei ca. 580 nm zeigt.

Zwei sehr hilfreiche Komponenten für die Einstellung eines hohen Brechwertes und zur Erzielung einer guten chemischen Beständigkeit sind ZrO₂ und HfO₂. Ein Mindestgehalt von HfO₂ von 0,01 Gew.-% oder 0,02 Gew.-% ist bevorzugt, da HfO₂ der Kristallisationstendenz des Glases schon in geringen Mengen entgegenwirkt. Zur Erzielung eines hohen Brechwertes ist ein Mindestgehalt von 1,4 Gew.-% für die Summe aus ZrO₂ und HfO₂ bevorzugt. Der Gehalt an ZrO₂ beträgt vorzugsweise 0,1 Gew.-% bis 10 Gew.-% und der Gehalt an HfO₂ vorzugsweise 0,03 Gew.-% bis 14,2 Gew.-%, weiter bevorzugt wird ein Gehalt von 1 Gew.-% bis 6,9 Gew.-% ZrO₂, mehr bevorzugt 2,1 Gew.-% bis 6 Gew.-% ZrO₂ und besonders bevorzugt 0,04 Gew.-% bis 3 Gew.-% HfO₂ und insbesondere 0,05 Gew.-% bis 1 Gew.-%. In einer besonders bevorzugten Ausführungsform beträgt der Gehalt an ZrO₂ wenigstens 0,5 Gew.-%, oder wenigstens 1 Gew.-%, bevorzugt wenigstens 3 Gew.-%; der Gehalt an ZrO₂ soll vorzugsweise nicht mehr als 8 oder 6 Gew.-% betragen. Es ist dabei überraschend, dass sich trotz des geringen bevorzugten Minimalgehalts an HfO₂ bereits positive Auswirkungen auf die Kristallisationstendenz abzeichnen. Preis und Reinheit das HfO₂ sind allerdings derzeit gegenüber ZrO₂ noch nicht wettbewerbsfähig. Daher soll der Gehalt an HfO₂ einen Wert von 2 Gew.-% und insbesondere von 1,5 Gew.-% nicht überschreiten.

Das erfindungsgemäße Glas kann bis zu 7,5 Gew.-% GeO₂ enthalten. GeO₂ ist ein guter Glasbildner und ist vor allem bei hohen Anforderungen an die Transmission bzw. Dämpfung im IR von Vorteil. Bevorzugt ist es bis 4 Gew.-% und weiter bevorzugt bis 3 Gew.-% im Glas enthalten. Bevorzugt ist das Glas frei von GeO₂. Auch Ga₂O₃ ist ein guter Glasbildner und kann bis 5 Gew.-%, bevorzugt bis 4 Gew.-% und besonders bevorzugt bis 3 Gew.-% im Glas enthalten sein. Andere Ausführungsformen sind allerdings frei von Ga₂O₃.

Weiter kann das erfindungsgemäße Glas bis zu 22 Gew.-%, bevorzugt bis zu 10 Gew.-%, weiter bevorzugt bis zu 9 Gew.-%, besonders bevorzugt bis zu 8 Gew.-%, mehr bevorzugt bis zu 5 Gew.% oder bis zu 4 Gew.-% Ta₂O₅ enthalten, der Mindestgehalt beträgt vorzugsweise wenigstens 0,3 Gew.-% oder wenigstens 0,5 Gew.-%. Das Oxid kann zur Einstellung der optischen Eigenschaften genutzt werden. Im Zusammenspiel mit den anderen hochbrechenden Oxiden (ZrO₂, La₂O₃, HfO₂), ist genau zu überlegen, ob der Gewinn an Brechwert nicht besser über die Oxide ZrO₂, La₂O₃ und HfO₂ erreicht werden kann.

Ebenfalls alternativ zu La₂O₃ kann Y₂O₃ eingesetzt werden. Das Glas enthält 0 bis 11,9 Gew.-% an Y₂O₃. Auch aus Kostengründen enthält das Glas jedoch vorzugsweise kein Y₂O₃. Bevorzugt beträgt der Gesamtgehalt an Ta₂O₅ und Y₂O₃ höchstens 30 Gew.-% zur Einstellung erfindungsgemäßer optische Eigenschaften.

Der Gehalt an Fluor bzw. Fluorid im erfindungsgemäßen Glas beträgt 0 Gew.-% bis 2 Gew.-%. Bevorzugt ist das Glas frei von dieser Komponente.

PbO kann im erfindungsgemäßen Glas enthalten sein, allerdings zu nicht mehr als 30 Gew.-%, weiter bevorzugt zu höchstens 20 Gew.-%. PbO wird vorzugsweise in Mengen von wenigstens 0,01 Gew.-%, weiter bevorzugt wenigstens 0,1 Gew.-% eingesetzt. Diese Komponente schützt das Glas vor Solarisation. Da Pb gesundheitlich bedenklich ist, sind erfindungsgemäße Gläser besonders bevorzugt frei von PbO. Es ist bemerkenswert, dass viele der erfindungsgemäßen Gläser ohne den Einsatz von PbO eine hervorragende Solarisationsbeständigkeit erzielen.

P₂O₅ kann in den Gläsern enthalten sein. Es senkt die Viskosität. Da Kristallisationsstabilität und Resistenz jedoch vermindert werden können, ist der Gehalt von P₂O₅ vorzugsweise auf bis zu 6 Gew.-% und weiter bevorzugt bis zu 4 Gew.-% Begrenzt. P₂O₅ ist außerdem eine Komponente, welche die Solarisationsneigung erhöht. Besonders bevorzugt ist das erfindungsgemäße Glas frei von P₂O₅ auch aufgrund der Gefahr stark exothermer Gemengereaktionen, der Bildung unerwünschter Kristallisationsprodukte und der Solarisationsneigung.

Der Gehalt an färbenden Verunreinigungen wie Cr₂O₃, NiO, CuO, CoO, Fe₂O₃ und weiteren färbenden Elementen soll möglichst niedrig sein. Daher soll die Obergrenze von 10 ppm, bevorzugt 5 ppm, weiter bevorzugt 3 ppm, mehr bevorzugt 2 ppm und besonders bevorzugt 0,5 ppm nicht überschritten werden.

Bevorzugt ist das erfindungsgemäße Glas frei von oft als Bleiersatz verwendeten Oxiden des Bi, da diese aufgrund einer Eigenabsorption im nahen UV-Bereich einen Gelbstich des Glases verursachen. Außerdem lässt sich Bi₂O₃ bei hohen Temperaturen leicht zu Bi⁰ reduzieren, welches einen grauen Schleier verursacht.

Das erfindungsgemäße Glas ist ferner bevorzugt frei von Platin. Auch Ag₂O, Au₂O₃ und Tl₂O sind bevorzugt nicht in den erfindungsgemäßen Gläsern enthalten.

Das Glas dieser Erfindung kann MnO aus technischen Gründen in geringen Mengen enthalten. MnO verbessert die Farbortverschiebung, wenn es in geringen Mengen verwendet wird. MnO führt in zu großen Mengen zur Solarisation und erzeugt nach Bestrahlung durch Photooxidation zu Mn³⁺ eine Bande bei 550 nm. Daher beträgt der Gehalt dieser Komponente höchstens 500 ppb, bevorzugt <250 ppb, weiter bevorzugt <150 ppb. Besonders bevorzugt ist das erfindungsgemäße Glas frei von MnO.

Für die aus dem erfindungsgemäßen Glas hergestellten Fasern existieren zwei Anwendungsfälle. Zum einen ist eine möglichst niedrige Dämpfung über den gesamten Spektralbereich gewünscht. Hier ist eine möglichst geringe Farbtemperaturverschiebung gefordert. Dies ist dann sinnvoll, wenn eine möglichst große Lichtmenge übertragen werden soll. Zum andern ist eine möglichst neutrale Farbtemperatur gefordert, wenn Objekte mit tageslichtähnlichem Licht beleuchtet werden sollen. Dies resultiert in einer hohen Farbtemperatur und einer negativen Farbtemperaturverschiebung bei Bestrahlung.

Das Element Mangan existiert im Glas in den Oxidationsstufen Mn²⁺ und Mn³⁺. Die Oxidationsstufe Mn²⁺ ist nahezu farblos und verursacht keine Banden im Dämpfungsspektrum. Die Oxidationsstufe Mn³⁺ zeigt eine breite Absorption um 550 nm, die zu einem rötlichen Farbeindruck führt. Zusammen mit den Banden von Fe²⁺ und Fe³⁺ ergibt sich jedoch ein neutraler Farbton. Bei hohen Läutertemperaturen um 1700°C existiert Mangan fast ausschließlich (>99%) in der Oxidationsstufe Mn²⁺. Durch Oxidation mit Sauerstoff oder Bestrahlung mit intensivem UV-Licht kann Mn²⁺ in Mn³⁺ umgewandelt werden.

Für eine möglichst niedrige Dämpfung ist es zu vermeiden, dass das Glas nennenswerte Menge an Mangan enthält, da die oben geschilderten Reaktionen nicht vermieden werden können. Von daher ist für diese Anwendung ein Mangangehalt von <200 ppb, bevorzugt <100 ppb und besonders bevorzugt <50 ppb einzuhalten. Der Gehalt des erfindungsgemäßen Glases an MnO beträgt bevorzugt <200 ppb.

Um eine möglichst farbneutrale Faser zu erhalten kann es sinnvoll sein, Mangan im Bereich von 200 bis 500 ppb zuzusetzen. Ein Gehalt an MnO des erfindungsgemäßen Glases von 200 bis 500 ppb ist bevorzugt, um eine möglichst farbneutrale Faser zu erhalten. Die Aktivierung des Farbzentrums Mn³⁺ kann durch eine kurzzeitige Bestrahlung mit UV-Licht erfolgen.

Die Dotierung mit Mangan kann durch geeignet ausgewählte mit Manganoxid verunreinigte Rohstoffe, durch Zusatz von MnO als eigenständige Komponenten oder durch ein mit Mangan legiertes Bauteil des Schmelzaggregates erfolgen. Vorzugsweise kann die Mangan-Freisetzung durch die Temperaturführung des Bauteils in bestimmten Grenzen gesteuert werden.

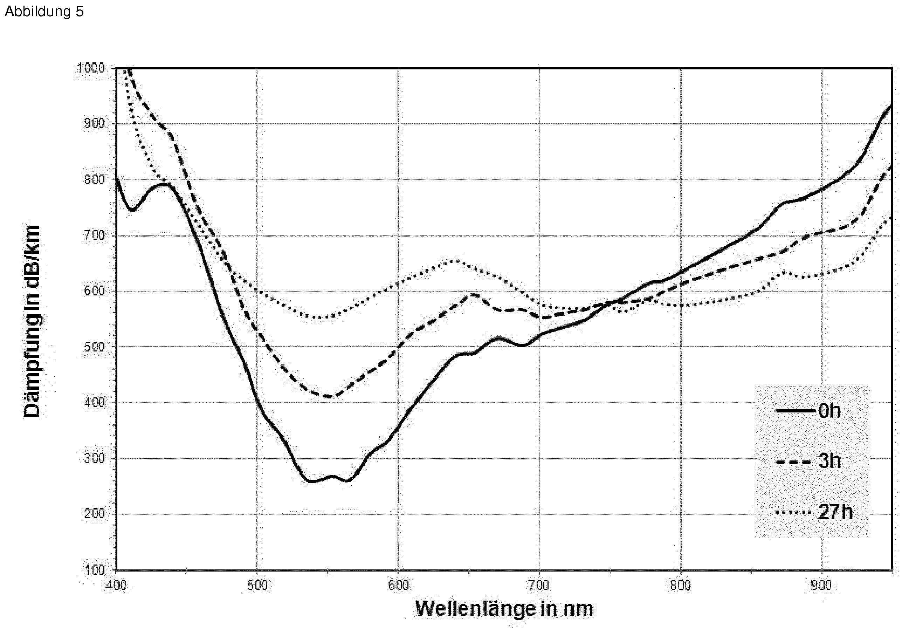

Vor Bestrahlung eines Glases, das einen Mangangehalt größer 500 ppb besitzt, liegen die Dämpfungswerte bei 550 nm unterhalb von 300 dB/Km. Nach Bestrahlung von wenigen Stunden wächst die Bande um 550 nm auf >300 dB/km an. Abb. 5 zeigt exemplarisch ein Glas, das weitaus mehr Mangan als 500 ppm enthält, um den Effekt deutlicher hervorzuheben. Die Abb. 5 zeigt das Dämpfungsspektrum eines Beispielglases 11, das 1,5 ppm Mangan enthält und bereits nach 3-Stunden einen Dämpfungswert von größer 300 dB/km bei 550 nm besitzt.

Das Glas ist vorzugsweise frei von As und Sb, weil diese Komponenten toxikologisch bedenklich sind und daher vielfach nicht akzeptiert werden. Außerdem verursachen diese beiden Komponenten Solarisation. Es ist ein wesentlicher Vorteil dieser Erfindung, dass solarisationsbeständige Gläser ohne den Einsatz dieser Komponenten herstellbar sind.

Außerdem sind die Gläser vorzugsweise frei von Nb und/oder Ti, weil diese Komponenten z.T. zwar die Stabilität gegen Solarisation erhöhen, dabei aber die Dämpfung im kurzwelligen Bereich ebenfalls erhöhen. Die Eigenabsorption im UV-Bereich führt zu einem unerwünschten Gelbstich der Gläser. Da sich Ce in dieser Hinsicht ähnlich wie Ti verhält, ist das Glas vorzugsweise auch frei von dieser Komponente. Es ist ein Vorteil dieser Erfindung, dass auf die Solarisationsstabilisatoren Ti, Ce und Pb verzichtet werden kann und trotzdem hohe Solarisationsbeständigkeit erzielt wird. Bevorzugt ist das erfindungsgemäße Glas frei von in dieser Beschreibung nicht genannten Komponenten. Insbesondere beim Nb₂O₅ ist noch zu beachten, dass die zurzeit erhältliche Reinheit nicht zufrieden stellend ist und es auch mit einem Teil der Mantelgläser zu unerwünschten, die Dämpfung erhöhenden Grenzflächeneffekten kommt. Aus diesem Grund enthält das Glas vorzugsweise kein Nb₂O₅.

Die Gläser dieser Erfindungen haben folgende Zusammensetzung in Gewichtsprozent:

| | von | bis |
|---|---|---|
| B₂O₃ | 0 | 24 |
| SiO₂ | 23 | 62,1 |
| Al₂O₃ | 0 | 10 |
| Li₂O | 0 | 10 |
| Na₂O | 0 | 18,5 |
| K₂O | 0 | 25,7 |
| BaO | 0 | 57,8 |
| ZnO | 3 | 40 |
| La₂O₃ | 0 | 25 |
| ZrO₂ | 0 | 10 |
| HfO₂ | 0 | 14,2 |
| SnO₂ | >0 | 2 |
| MgO | 0 | 8 |
| CaO | 0 | 8 |
| SrO | 0 | 24,4 |
| Ta₂O₅ | 0 | 22 |
| Y₂O₃ | 0 | 11,9 |
| Rb₂O | 0 | 15 |
| Cs₂O | 0 | 21 |
| GeO₂ | 0 | 7,5 |
| F | 0 | 2 |
| Σ R₂O | 5 | 20 |
| Σ MgO, CaO, SrO, ZnO | 20 | 42 |

Besonders bevorzugte Gläser dieser Erfindung haben folgende Zusammensetzung in Gewichtsprozent:

| | von | bis |
|---|---|---|
| B₂O₃ | 0 | 0 |
| SiO₂ | 35 | 50 |
| Al₂O₃ | 1 | 10 |
| Li₂O | 0 | 1 |
| Na₂O | 0 | 15 |
| K₂O | 0 | 15 |
| BaO | 20 | 30 |
| ZnO | 3 | 15 |
| La₂O₃ | 0 | 10 |
| ZrO₂ | 0,1 | 10 |
| P₂O₅ | 0 | 6 |
| HfO₂ | 0 | 0 |
| SnO₂ | >0 | 0,4 |
| MgO | 0 | 8 |
| CaO | 0 | 8 |
| SrO | 0 | 8 |
| Y₂O₃ | 0 | 0 |
| Rb₂O | 0 | 0 |
| Cs₂O | 0 | 1 |
| GeO₂ | 0 | 0 |
| Σ R₂O | 5 | 15 |
| Σ MgO, CaO, SrO | 0 | 8 |

Andere besonders bevorzugte Gläser dieser Erfindung haben folgende Zusammensetzung in Gewichtsprozent:

| | von | bis |
|---|---|---|
| B₂O₃ | 0 | 1 |
| SiO₂ | 42 | 53 |
| Al₂O₃ | 0 | 1,5 |
| Li₂O | 0 | 3 |
| Na₂O | 0 | 14 |
| K₂O | 0 | 12 |
| BaO | 0 | 0,9 |
| ZnO | 16 | 38 |
| La₂O₃ | 0 | 0 |
| ZrO₂ | 0 | 2 |
| HfO₂ | 0 | 0 |
| SnO₂ | >0 | 0,4 |
| MgO | 0 | 6 |
| CaO | 0 | 5 |
| SrO | 0 | 6 |
| Y₂O₃ | 0 | 0 |
| Rb₂O | 0 | 0 |
| Cs₂O | 0 | 0 |
| GeO₂ | 0 | 0 |
| F | 0 | 2 |
| Σ R₂O | >2 | |

Andere besonders bevorzugte Gläser dieser Erfindung haben folgende Zusammensetzung in Gewichtsprozent:

| | von | bis |
|---|---|---|
| B₂O₃ | 6 | 24 |
| SiO₂ | 25 | 55 |
| Al₂O₃ | 0 | 0 |
| Li₂O | 0 | 10 |
| Na₂O | 0 | 14 |
| K₂O | 0 | 4,4 |
| BaO | 16 | 42 |
| ZnO | 3 | 40 |
| La₂O₃ | 0 | 0 |
| ZrO₂ | 0 | 1 |
| HfO₂ | 0 | 0 |
| SnO₂ | >0 | 0,4 |
| MgO | 0 | 3 |
| CaO | 0 | 3 |
| SrO | 0 | 4 |
| Y₂O₃ | 0 | 0 |
| Rb₂O | 0 | 0 |
| Cs₂O | 0 | 0 |
| GeO₂ | 0 | 0 |
| F | 0 | 3 |

Die Gläser mit der folgenden Zusammensetzung in Gewichtsprozent sind erfindungsgemäß ganz besonders bevorzugt:

| | von | bis |
|---|---|---|
| B₂O₃ | 0 | 5,1 |
| SiO₂ | 28,3 | 62,1 |
| Al₂O₃ | 0 | 0 |
| Li₂O | 0,08 | 9,9 |
| Na₂O | 0 | 18,5 |
| K₂O | 0 | 25,7 |
| BaO | 0,5 | 12,8 |
| ZnO | 13 | 37,2 |
| La₂O₃ | 1,6 | 14,5 |
| ZrO₂ | 2,1 | 9,8 |
| HfO₂ | 0,04 | 14,2 |
| SnO₂ | >0 | 0,3 |
| MgO | 0 | 1,3 |
| CaO | 0 | 1,9 |
| SrO | 0 | 9 |
| Y₂O₃ | 0 | 0 |
| Rb₂O | 0 | 15 |
| Cs₂O | 0 | 21 |
| GeO₂ | 0 | 7,5 |

Andere besonders bevorzugte Gläser dieser Erfindung haben folgende Zusammensetzung in Gewichtsprozent:

| | von | bis |
|---|---|---|
| B₂O₃ | 0 | 15 |
| SiO₂ | 34,5 | 51,8 |
| Al₂O₃ | 0,1 | 2,8 |
| Li₂O | 0 | 0,2 |
| Na₂O | 2,7 | 8,9 |
| K₂O | 0,1 | 1,4 |
| BaO | 14,7 | 57,8 |
| ZnO | 3 | 17 |
| La₂O₃ | 0 | 16,4 |
| ZrO₂ | 0 | 6,9 |
| HfO₂ | 0 | 0 |
| SnO₂ | >0 | 0,4 |
| MgO | 0 | 2,9 |
| CaO | 0 | 4,8 |
| SrO | 0 | 24,4 |
| Y₂O₃ | 0 | 11,9 |
| Rb₂O | 0 | 3,9 |
| Cs₂O | 0 | 5,8 |
| GeO₂ | 0 | 0 |

In einer bevorzugten Ausführungsform haben die erfindungsgemäßen Gläser folgende Zusammensetzung in Gewichtsprozent:

| | von | bis |
|---|---|---|
| B₂O₃ | 0,1 | <5 |
| SiO₂ | 23 | 35 |
| Al₂O₃ | 0 | 1 |
| Li₂O | 0,2 | 4 |
| Na₂O | 0 | <3 |
| K₂O | 0 | 3 |
| BaO | 5 | 35 |
| ZnO | 8 | 25 |
| La₂O₃ | 10 | 25 |
| ZrO₂ | 0,5 | 9 |
| HfO₂ | 0,01 | 2 |
| SnO₂ | 0,01 | 2 |
| CaO | 0 | 3 |
| SrO | 0 | 1 |
| Ta₂O₅ | 0 | 22 |

R₂O ist jeweils die Summe der Gehalte aller Alkalimetalloxide.

Eine oder mehrere der folgenden Komponenten kann enthalten sein: Cs₂O, Rb₂O, MgO, CaO, SrO, Gd₂O₃, Lu₂O₃, Sc₂O₃, Y₂O₃, In₂O₃, Ga₂O₃ und WO3.

Folgende Komponenten sollten im Glas nicht enthalten sein oder lediglich in Konzentrationen, die durch unvermeidbare Verunreinigungen der Rohstoffe bedingt sind: TiO₂, CeO₂, Nb₂O₅, MoO₃, Bi₂O₃, PbO, CdO, Tl₂O, AS₂O₃, Sb₂O₃, SO₃, SeO₂, TeO₂, BeO, radioaktive Elemente und färbende Komponenten, soweit im Text nicht anders beschrieben. Insbesondere auf TiO₂ sollte verzichtet werden, weil diese Komponente für eine ausgeprägte Absorption im UV-Bereich führen kann. In bevorzugten Ausführungsformen wird auch auf die Komponente WO₃ verzichtet.

Die Komponenten TiO₂, CeO₂, Nb₂O₅ und/oder Bi₂O₃ können bis maximal 0,5 Gew.-%, bevorzugt bis 0,3 Gew.-% und besonders bevorzugt bis 0,2 Gew.-% im erfindungsgemäßen Glas enthalten sein. In einer bevorzugte Ausführungsform ist das Glas frei von diesen Komponenten.

Bevorzugt sind die erfindungsgemäßen Gläser frei von optisch aktiven Komponenten, insbesondere Sm₂O₃, Nd₂O₃, Dy₂O₃, Pr₂O₃, Eu₂O₃, Yb₂O₃, Tb₂O₃, Er₂O₃, Tm₂O₃ und/oder Ho₂O₃. CeO₂ kann zur Stabilisierung gegen Solarisation dienen. Allerdings absorbiert CeO₂ im UV-Bereich, so dass bevorzugte Gläser dieser Erfindung kein CeO₂ enthalten.

Der Gehalt der Komponenten Erdalkalimetalloxide, La₂O₃, Ta₂O₅, ZrO₂ und HfO₂ beträgt in Summe vorzugsweise und insbesondere für Gläser mit Brechwerten von mehr als 1,65 wenigstens 40 Gew.-%, weiter bevorzugt wenigstens 42 Gew.-%, mehr bevorzugt wenigstens 50 Gew.-% und besonders bevorzugt wenigstens 55 Gew.-%. Wenn der Gehalt dieser Komponenten zu niedrig ist, kann der bevorzugte Brechungsindex normalerweise nicht erreicht werden. Formulierungsbedingt sollte diese Summe einen Wert von 72 Gew.-% nicht übersteigen.

Das Glas kann ferner Fluor bzw. Fluorid und/oder Chlor bzw. Chlorid umfassen. Der Gehalt an Fluorid beträgt bevorzugt bis zu 0,6 Gew.-%, weiter bevorzugt bis zu 0,55 Gew.-%. Chlorid kann in einem Gehalt von höchstens 0,2 Gew.-%, bevorzugt bis zu 0,15 Gew.-% am Glas enthalten sein. Besondere Ausführungsformen des Glases sind frei von Fluor bzw. Fluorid und/oder Chlor bzw. Chlorid.

Das Glas dieser Erfindung ist vorzugsweise ein Kernglas in einem Lichtleiter. Zu diesem Kernglas passende Mantelgläser werden weiter unten beschrieben. Das Glas dieser Erfindung ist mit dem nachfolgend beschriebenen Verfahren erhältlich.

Erfindungsgemäß ist auch ein Lichtleiter, der das erfindungsgemäße Glas als Kernglas umfasst und mit einem Mantelglas ummantelt ist. Bei dem Lichtleiter handelt es sich vorzugsweise um eine Stufenindexfaser. Um eine ausreichende Faserfestigkeit zu gewährleisten, sollte das Kernglas einen linearen thermischen Ausdehnungskoeffizienten α_{(20/300°C)} von mindestens 1,5 bis 2,6 x 10⁻⁶ K⁻¹ über dem des verwendeten Mantelglases ausweisen.

Der Brechwert des Mantelglases ist niedriger als der des Kernglases, damit das Licht an der Grenzfläche zwischen Kern- und Mantelglas reflektiert wird. Der Brechwert des Kernglases beträgt vorzugsweise zwischen 1,55 und 1,75 und insbesondere wenigstens 1,65. In besonders bevorzugten Ausführungsformen beträgt der Brechwert 1,69 bis 1,74, besonders bevorzugt 1,70 bis 1,725. Der Brechwert des Mantelglases beträgt vorzugsweise zwischen 1,48 und 1,52.

Die Abbezahlen v_{d} der erfindungsgemäßen Gläser liegen in einem Bereich von 42 bis 60, bevorzugt von 43 bis 52, weiter bevorzugt von 44 bis 51 und besonders bevorzugt von 45 bis 50.

Ein Mantelglas, das geeignet ist, mit einem erfindungsgemäßen Glas in einem Lichtleiter verwendet zu werden, weist vorzugsweise einen Gehalt an SiO₂ von >60 Gew.-%, weiter bevorzugt >65 Gew.-% und besonders bevorzugt von mindestens 69 Gew.-% auf. Der SiO₂-Gehalt beträgt bevorzugt höchstens 75 Gew.-% und besonders bevorzugt bis zu 73 Gew.-%. Das Mantelglas umgibt das erfindungsgemäße Glas in dem Lichtleiter. Das erfindungsgemäße Glas bildet das sogenannte Kernglas. Daher ist das Mantelglas tendenziell stärkeren Umwelteinflüssen ausgesetzt als das Kernglas. Ein hoher SiO₂-Gehalt verleiht bessere chemische Resistenz. Folglich ist der Gehalt an dieser Komponente im Mantelglas bevorzugt größer als im Kernglas.

Das Mantelglas umfasst ferner mindestens 5,5 Gew.-% an Alkalioxiden. Weiter bevorzugt beträgt der Gehalt des Mantelglases an Alkalioxiden mindestens 7 Gew.-% und besonders bevorzugt mindestens 8 Gew.-%. Alkalioxide umfassen dabei bevorzugt Na₂O, K₂O, Li₂O.

Der Gehalt an Na₂O beträgt bevorzugt mindestens 0,5 Gew.-%, weiter bevorzugt mindestens 2 Gew.-%. In einer besonderen Ausführungsform des Mantelglases sind mindestens 6 Gew.-% an Na₂O im Mantelglas enthalten. Der Gehalt an Na₂O beträgt vorzugsweise höchstens 15,5 Gew.-%, weiter bevorzugt höchstens 15 Gew.-%.

Li₂O liegt bevorzugt mit einem Anteil von bis zu 0,7 Gew.-%, weiter bevorzugt bis zu 0,6 Gew.-% im Glas vor. In bevorzugten Ausführungsformen ist das Glas frei von Li₂O.

Der Gehalt an K₂O am Mantelglas beträgt bevorzugt mindestens 2 Gew.-%, weiter bevorzugt mindestens 2,5 Gew.-%. Der Gehalt an K₂O beträgt höchstens 8 Gew.-%, bevorzugt bis zu 7,5 Gew.-%. In bevorzugten Ausführungsformen ist das Glas frei von K₂O. Ein bevorzugtes Mantelglas enthält neben Na₂O und K₂O keine weiteren Alkalioxide.

Ein bevorzugtes Mantelglas umfasst weiterhin mindestens 0,5 Gew.-% an Oxiden ausgewählt aus der Gruppe bestehend aus CaO, MgO, BaO und ZnO und Mischungen davon. Weiter bevorzugt beträgt der Gesamtgehalt dieser Oxide mindestens 0,6 Gew.-%. Der Gesamtgehalt an solchen Oxiden beträgt vorzugsweise höchstens 12 Gew.-%, bevorzugt höchstens 11 Gew.-%, weiter bevorzugt höchstens 5 Gew.-%, besonders bevorzugt höchstens 2,5 Gew.-%. Bevorzugt umfasst das Mantelglas genau zwei Oxide ausgewählt aus CaO, MgO, BaO und ZnO. Ganz besonders bevorzugt umfasst das Mantelglas nur ein Oxid ausgewählt aus der Gruppe bestehend aus CaO, MgO, BaO und ZnO.

Ein bevorzugtes Mantelglas umfasst ferner Al₂O₃ mit einem Gehalt von mindestens 0,5 Gew.-%, bevorzugt 1 Gew.-%, weiter bevorzugt sind mindestens 2 Gew.-% Al₂O₃ im Glas enthalten. Das Mantelgas umfasst jedoch höchstens 7,5 Gew.-%, bevorzugt bis zu 7 Gew.-%, weiter bevorzugt höchstens 3 Gew.-% und noch weiter bevorzugt 1 Gew.-% an Al₂O₃.

Das Mantelglas kann ferner B₂O₃ umfassen, wobei mindestens 9 Gew.-%, bevorzugt mindestens 9,5 Gew.-% an B₂O₃ im Mantelglas enthalten sind. Besonders bevorzugt enthält das Mantelglas höchstens 19 Gew.-%, besonders bevorzugt bis zu 18,5 Gew.-% B₂O₃.

In bevorzugten Ausführungsformen umfasst das Mantelglas einen höheren Gehalt der Summe der Komponenten B₂O₃ und Al₂O₃ als das Kernglas.

Vorzugsweise ist der Gehalt an SiO₂ im Mantelglas größer als der SiO₂-Gehalt im Kernglas. Außerdem ist vorzugsweise der La₂O₃-Gehalt im Mantelglas viel kleiner als im Kernglas. Zu hohe SiO₂-Anteile im Kern erlauben nicht mehr die Einstellung der relativ hohen Brechwerte, die mit La₂O₃ eingestellt werden. Außerdem ist der ZnO-Gehalt im Mantelglas vorzugsweise viel geringer als im Kernglas. Der Grund ist, dass die Viskosität des Kernglases vorzugsweise geringer ist als die des Mantelglases. Das verbessert die Faserzugeigenschaften. In bevorzugten Ausführungsformen ist die Summe der Gehalte von ZnO und BaO im Mantelglas kleiner als diese Summe im Kernglas.

Das Mantelglas kann ZrO₂ enthalten, wobei vorzugsweise höchstens 0,04 Gew.-%, weiter bevorzugt bis zu 0,03 Gew.-% ZrO₂ im Mantelglas vorliegen.

As₂O₃ kann mit einem Gehalt von bis zu 0,05 Gew.-%, bevorzugt bis zu 0,01 Gew.-% im Glas enthalten sein. Arsenoxid ist verantwortlich für Solarisation. Im Mantelglas ist eine gute Dämpfung aber nicht in dem Maße erforderlich wie im erfindungsgemäßen Kernglas. Ganz besonders bevorzugt ist das Mantelglas trotzdem frei von AS₂O₃, weil Arsen giftig ist und daher vermieden werden sollte. Dasselbe gilt auch für Sb₂O₃.

Das Mantelglas kann ferner Fluor bzw. Fluorid und/oder Chlor bzw. Chlorid umfassen. Der Gehalt an Fluorid beträgt bevorzugt bis zu 0,6 Gew.-%, weiter bevorzugt bis zu 0,55 Gew.-%. Chlorid kann in einem Gehalt von höchstens 0,2, bevorzugt bis zu 0,15 Gew.-% am Glas enthalten sein. Besondere Ausführungsformen des Mantelglases sind frei von Fluor bzw. Fluorid und/oder Chlor bzw. Chlorid.

Die folgende Tabelle zeigt einige bevorzugte Zusammensetzungen von Mantelgläsern, die zusammen mit den erfindungsgemäßen Gläsern verwendet werden können. Die Mantelgläser enthalten (in Gew.-% auf Oxidbasis):

| **Oxide** | **Gruppe 1** | **Gruppe 2** | **Gruppe 3** | **Gruppe 4** |
|---|---|---|---|---|
| SiO₂ | 70 - 78 | 63 - 75 | 75 - 85 | 62 - 70 |
| Al₂O₃ | 5 - 10 | 1 - 7 | 1 - 5 | 1 - 10 |
| B₂O₃ | 5 - 14 | 0 - 3 | 10 - 14 | > 15 |
| Li₂O | frei | 0 - 1 | 0 - 3 | < 0,1 |
| Na₂O | 0 - 10 | 8 - 20 | 2 - 8 | 0 - 10 |
| K₂O | 0 - 10 | 0 - 6 | 0 - 1 | 0 - 10 |
| MgO | 0 - 1 | 0 - 5 | frei | 0 - 5 |
| CaO | 0 - 2 | 1 - 9 | frei | 0 - 5 |
| SrO | 0 - 1 | frei | frei | 0 - 5 |
| BaO | 0 - 1 | 0 - 5 | frei | 0 - 5 |
| F | 0 - 1 | 0 - 1 | frei | 0 - 1 |

Ein Fachmann ist in der Lage, anhand seines Fachwissens auch noch weitere Mantelgläser einzusetzen. Es ist jedoch nicht mit Sicherheit vorhersehbar, ob Mantelgläser auch bei Vorliegen der erforderlichen physikalischen Eigenschaften in jedem Fall mit den Kerngläsern harmonieren und gute Stufenfasern ergeben. Es empfiehlt sich daher im konkreten Einzelfall eine vorgesehene Mantelglas-Kernglas-Paarung auf ihre Eignung hin experimentell zu überprüfen.

### Beispiele

Zur Herstellung der erfindungsgemäßen Gläser wurden Gemenge aus herkömmlichen, von unvermeidlichen Verunreinigungen abgesehen Rohstoffen bei 1500-1580°C in einem Hochfrequenzbeheizten Skulltiegel über einen Zeitraum von 3 Stunden eingelegt und aufgeschmolzen. Die Schmelze auf eine Temperatur von 1550-1630°C aufgeheizt und anschließend 45 min geläutert. Die Temperatur wurde anschließend auf 1540°C abgesenkt und 30 min mit Sauerstoff gebubbelt. Die Temperatur wurde dann über einen Zeitraum von 15-20 Minuten auf 1450° C abgesenkt und das Glas gegossen. Die Kühlung der Glasblöcke erfolgte ab 660°C mit einer Rate von 10 K/h auf Raumtemperatur.

Die Ergebnisse sind in der Tabelle 1 zusammengefasst. Die Zusammensetzungen der Beispiele 3, 4, 6 bis 8 und 11 bis 14 sind erfindungsgemäß. Die Angaben zur Zusammensetzung der optischen Gläser/Kerngläser sind in Gew.-% auf Oxidbasis angegeben und wurden analysiert. Weiterhin bedeuten n_{d} den Brechungsindex, v_{d} die Abbe-Zahl, Pg,F die relative Teildispersion für die Wellenlängen g und F, α_{20/300} den linearen thermischen Wärmeausdehnungskoeffizienten im Bereich von 20° C bis 300° C gemäß ISO 7991, Tg die Glastransformationstemperatur gemäß ISO 7884, die Dichte nach der Auftriebsmethode (Buoancy flotation method) entsprechend dem Archimedischen Prinzip, CR die Klimaresistenz nach ISO/WD 13384, FR die Flecken-Resistenz nach der SCHOTT-Methode und AR die alkalische Resistenz nach ISO/DIN10629.

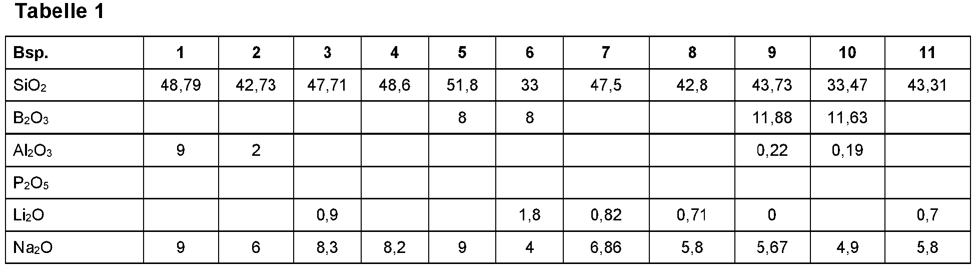

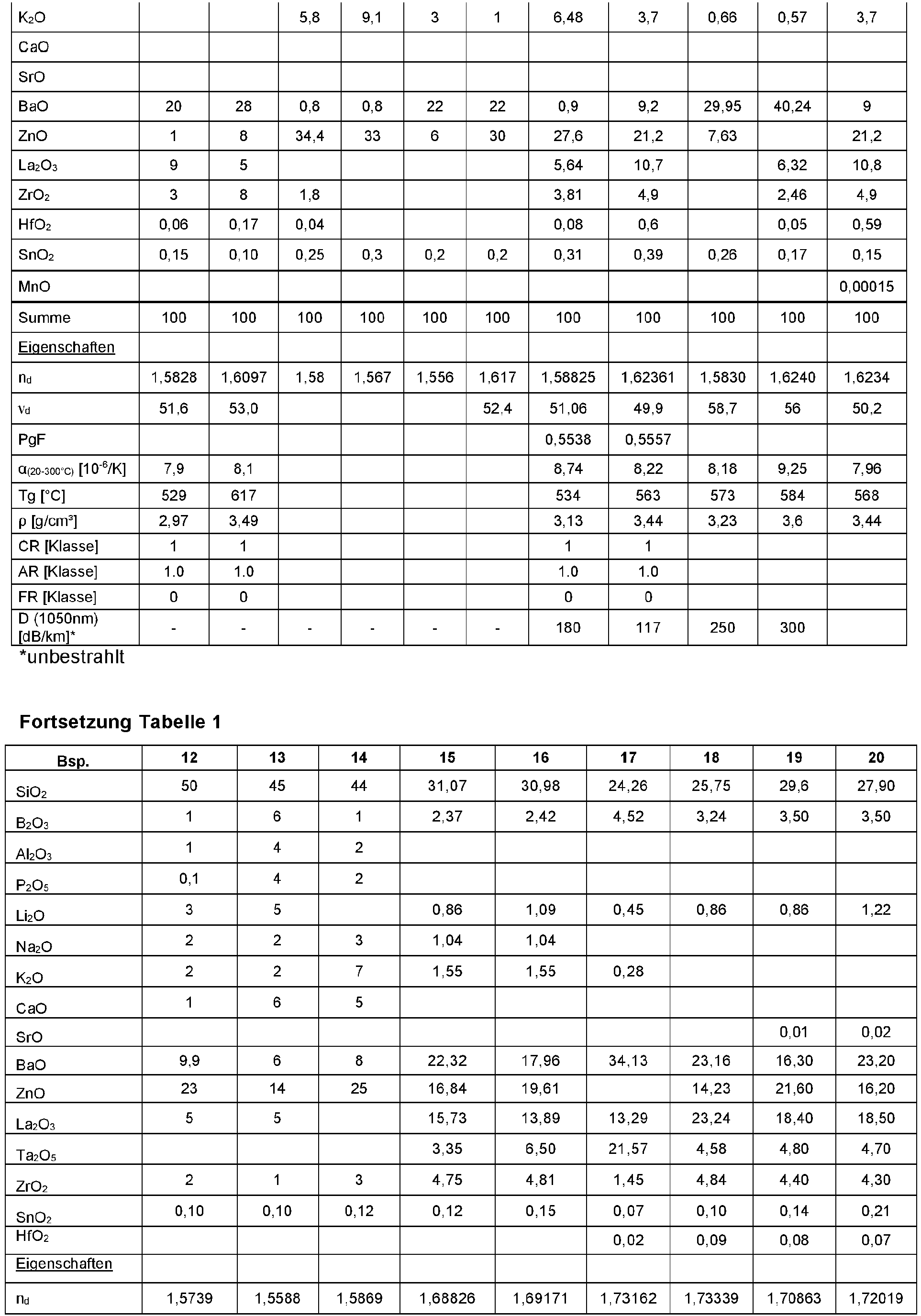

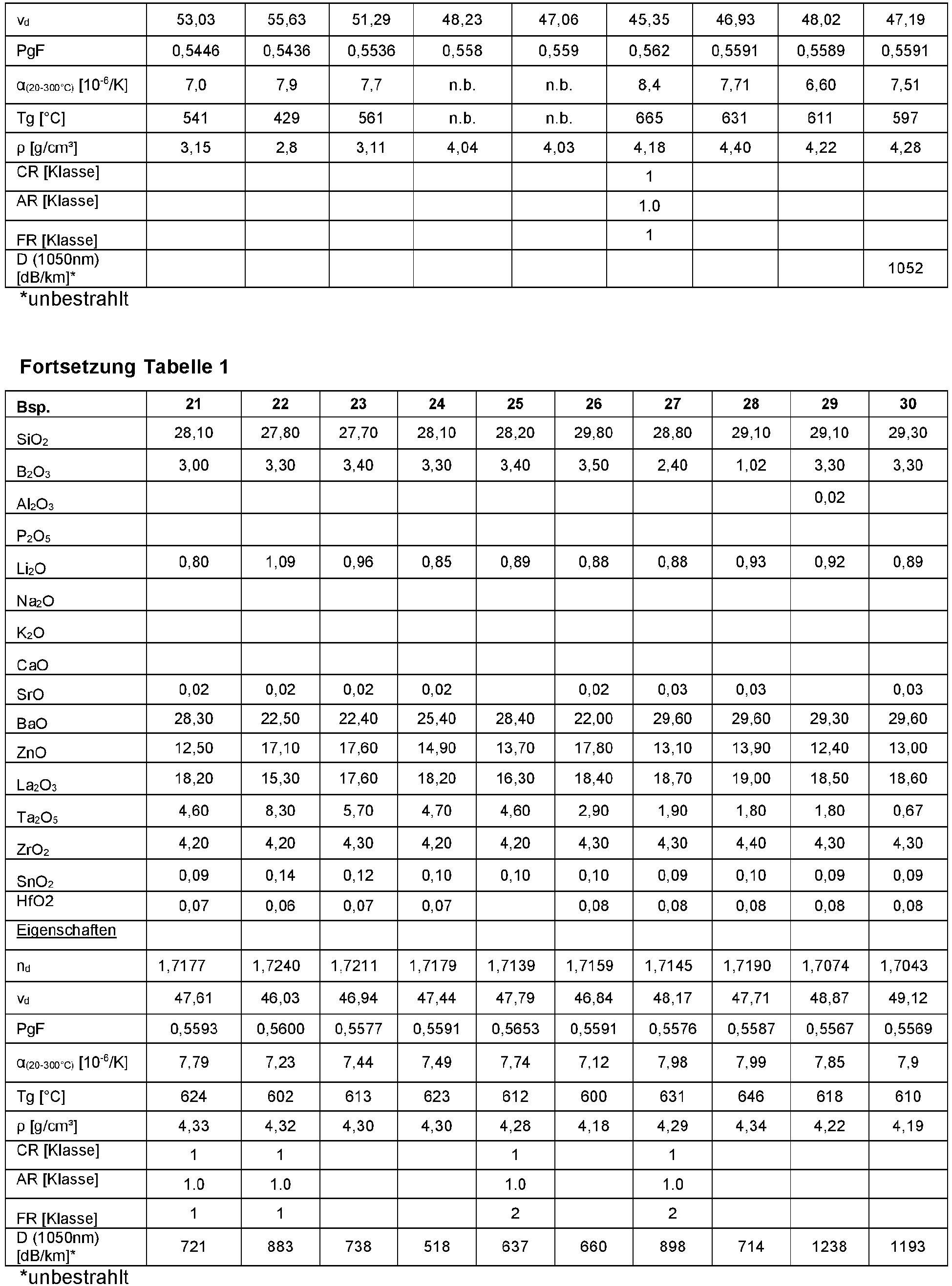

In der Tabelle 2 sind zwei Mantelgläser mit ihrer Zusammensetzung (gemäß Analyse in Gew.-% auf Oxidbasis) aufgeführt. Weiterhin bedeuten nd den Brechungsindex, α_{20/300} den linearen thermischen Wärmeausdehnungskoeffizienten im Bereich von 20° C bis 300° C gemäß ISO 7991, EW die Erweichungstemperatur bei einer Viskosität von 10^{7,6} dPas, S die Säurebeständigkeit nach ISO 12116, L die Laugenbeständigkeit nach DIN ISO 695.

**Tabelle 2**

| **Beispiel** | **A** | **B** |
|---|---|---|
| **Mantelglastyp** | **Gruppe 1** | **Gruppe 2** |
| SiO₂ | 73,9 | 69,9 |
| B₂O₃ | 9,60 | 1,0 |
| Na₂O | 6,60 | 12,6 |
| K₂O | 2,56 | 3,2 |
| MgO | 0,01 | 2,7 |
| CaO | 0,63 | 5,1 |
| BaO | 0,04 | 2,1 |
| Al₂O₃ | 6,62 | 4,0 |
| TiO₂ | | 0,1 |
| F | 0,08 | 0,2 |
| Cl | 0,18 | |
| Fe₂O₃ | 4,E-02 | |
| Sb₂O₃ | <0,005 | |
| As₂O₃ | <0,005 | 0,1 |
| Summe | 100,26 | 101 |

| Eigenschaften | | |
|---|---|---|
| n_{d} | 1,49 | 1,514 |
| α_{(20-300°C)} [10⁻⁶/K] | 5,5 | 9,1 |
| EW [°C] | 790 | 720 |
| S [Klasse] | 1 | 1 |
| L [Klasse] | 2 | 2 |

Da die erfindungsgemäßen Gläser insbesondere als Kerngläser für optische Fasern, geeignet sind, wurden aus ausgewählten Kern-Gläsern gemäß Tabelle 1 zusammen mit ausgewählten Mantelgläsern gemäß Tabelle 2 optische Fasern mit einem Durchmesser von 30, 50 und 70 µm hergestellt und ihre physikalischen Daten ermittelt, die in Tabelle 3 gezeigt sind.

Die Herstellung der Fasern erfolgte nach dem bekannten Stab-Rohr-Ziehverfahren auf einer üblichen Stab-Rohr-Ziehmaschine mit zylindrischem Ofen gemäß Stand der Technik. Die Dämpfung der Fasern wurde gemäß DIN 58141 Teil 1 bestimmt. ÖW ist der Öffnungswinkel und wurde nach DIN 58141-3 ermittelt, ΔÖW ist die Differenz der Öffnungswinkel der 1m langen und der 3,8m langen und im Durchmesser 50µm messenden Faser.

Die Farbtemperatur [K] des aus der Faser nach Durchgang durch eine bestimmte Faserlänge austretenden Lichts wurde nach Einstrahlung von Normlicht D65 (Farbtemperatur 6504 K) bestimmt. Die Ergebnisse sind in Tabelle 3 aufgeführt. Die Dämpfung bei den verschiedenen Lichtwellenlängen wurde in dB km⁻¹ und der Öffnungswinkel sowie die Differenz der Öffnungswinkel wurden in Grad angegeben.

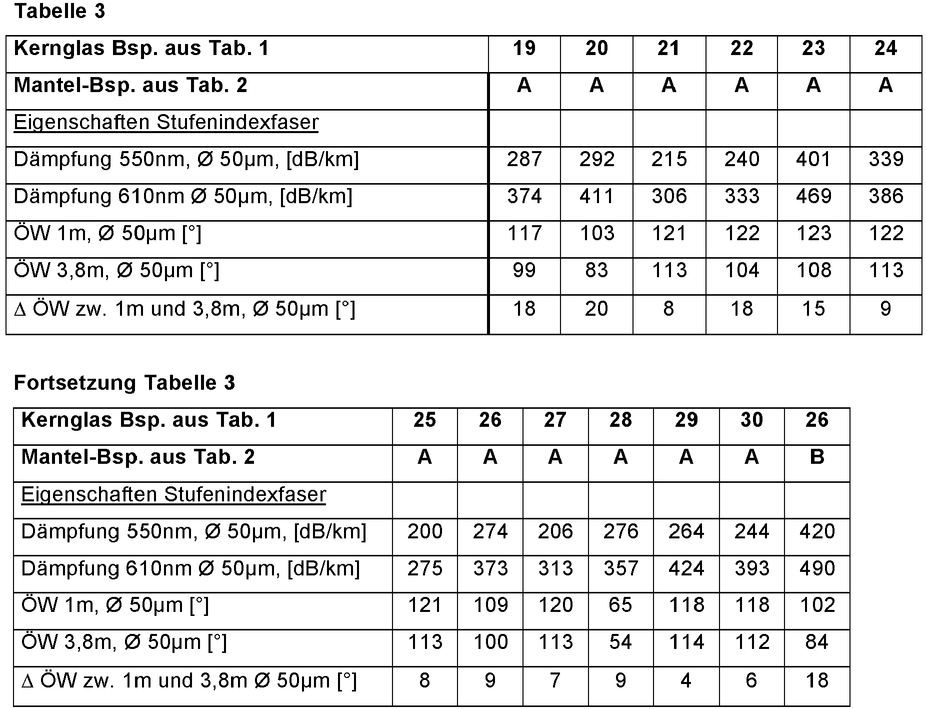

Die folgende Tabelle 4 zeigt die Auswirkung erfindungsgemäßer Maßnahmen auf eine Vielzahl von Varianten des Beispielglases 8:

**Tabelle 4**

| **Bsp.8** | | | | | | |
|---|---|---|---|---|---|---|
| Variante | Bubbling | D(920nm) [dB/km] | Δ(900-700nm) | D1050nm [dB/Km] | T Bubbling [°C] | t_{Bubbling} [min] |
| a | ja | 158 | 32 | 170 | 1450 | 30 |
| b | ja | 196 | 44 | 207 | 1430 | 30 |
| c | ja | 339 | 132 | 368 | 1450 | 15 |
| d | ja | 286 | 102 | 310 | 1450 | 30 |
| e | ja | 206 | 54 | 238 | 1400 | 30 |
| f | ja | 266 | 95 | 290 | 1450 | 30 |
| g | ja | 225 | 61 | 245 | 1450 | 30 |
| h | ja | 117 | 17 | 129 | 1440 | 30 |
| i | ja | 116 | 19 | 125 | 1450 | 30 |
| j | ja | 116 | -5 | 118 | 1480 | 30 |
| k | ja | 174 | 22 | 183 | 1450 | 30 |
| l | ja | 208 | 48 | 222 | 1480 | 30 |
| m | ja | 127 | 16 | 136 | 1480 | 30 |
| n | nein | 801 | 338 | 864 | - | - |
| o | nein | 663 | 255 | 714 | - | - |

Die unterschiedlichen Dämpfungen ergeben sich zum Teil aus unterschiedlichen Läutertemperaturen und zum Teil daraus, dass die Rohstoffe von unterschiedlichen Herstellern bezogen wurden. Es ist erkennbar, dass das Bubbling von allen Maßnahmen den stärksten Effekt auf die Dämpfung hat.

**Tabelle 5**

| **Bsp. 7** | | | | | | |
|---|---|---|---|---|---|---|
| Variante | Bubbling | D(920nm) [dB/km] | Δ(900-700nm) | D1050nm [dB/Km] | T Bubbling [°C] | t_{Bubbling} [min] |
| a | nein | 338 | 126 | 410 | - | - |
| b | ja | 253 | 94 | 279 | 1460 | 30 |

Auch für Beispielglas 7 konnte ein deutlicher Zusammenhang zwischen Bubbling und Dämpfung aufgezeigt werden.

Die folgende Tabelle 6 zeigt den Zusammenhang zwischen dem Gehalt an Sn²⁺ in einer Probe und der Läutertemperatur einerseits und dem Bubbling andererseits (Mengenangaben in Gew.-%).

**Tabelle 6**

| **Glas** | **LT*(°C)** | **Bubbling** | **Sn^{g}** | **Sn²⁺** | **Sn²⁺/Sn** |
|---|---|---|---|---|---|
| 8 | 1700 | Ja | 0,1 | 0,005 | 5% |
| 8 | 1550 | Nein | 0,1 | 0,005 | 5% |
| 7 | 1800 | Nein | 0,11 | 0,010 | 10% |
| 8 | 1700 | Nein | 0,11 | 0,010 | 10% |
| 8 | 1710 | Nein | 0,11 | 0,014 | 13% |

| | | | | | |
|---|---|---|---|---|---|
| * Läutertemperatur; ^{g} Gesamtmenge Sn | | | | | |

Es ist erkennbar, dass bei hohen Temperaturen ein größerer Teil des Zinns in reduzierter Form vorliegt. Damit SnO₂ als Läutermittel wirkt, sind allerdings sehr hohe Temperaturen notwendig. Die Tabelle zeigt, dass bei erfindungsgemäßem Bubbeln nach der Läuterung der Gehalt an Sn²⁺ zurück gedrängt wird. Der Einfluss des Bubbelns wird besonders deutlich. Im Gleichen Maße wie Sn²⁺ sich zum Gesamtzinngehalt verhält, verhält sich auch Fe²⁺ zum Gesamteisengehalt.

Die ermittelten Werte gehen mit starkem Messfehler einher. Daher sind die erfindungsgemäßen Gläser durch die Dämpfung in dB/km charakterisiert. Das folgende Beispiel zeigt, dass ein verminderter Gehalt an Fe²⁺ im Glas einen stark positiven Einfluss auf die Dämpfung hat. Begünstigt wird dies durch relativ niedrige Läutertemperaturen, die eine Läuterung mit SnO₂ erlauben, durch zusätzliches O₂-Bubbling, das das Glas oxidiert, homogenisiert und Streuterme mindert und durch den Einsatz hochreiner Rohstoffe.

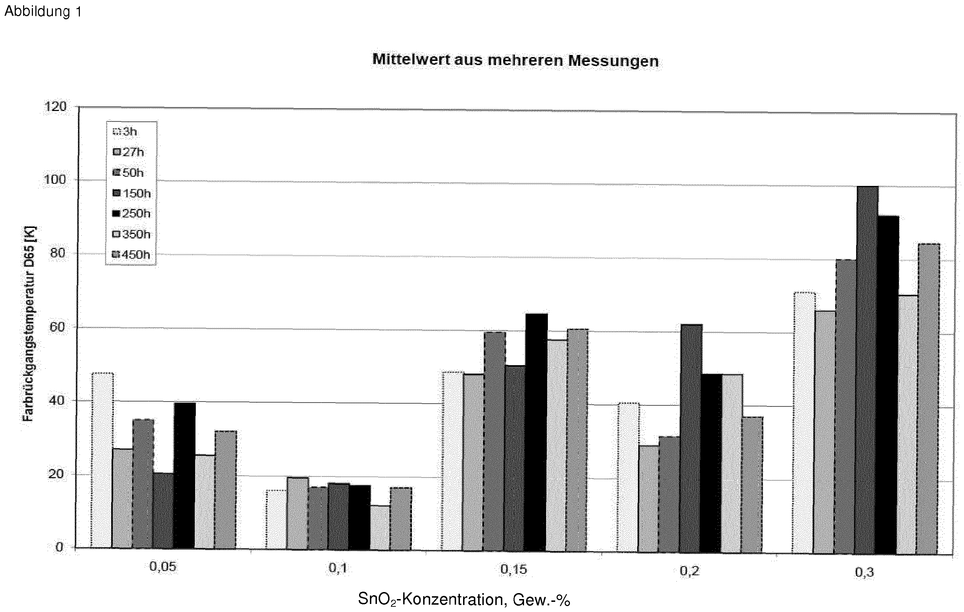

**Abbildung 1** zeigt den Einfluss des SnO₂-Gehaltes im Glas auf die Solarisationsbeständigkeit. Die Abbildung illustriert nur eine Auswahl der vielen Versuche und Analysen, die durchgeführt wurden, um den optimalen Gehalt des Läutermittels im Hinblick auf die Solarisationsbeständigkeit zu ermitteln.

Die dargestellten Ergebnisse sind Mittelwerte aus mehreren Messungen. Die einzelnen Balken zeigen das Ausmaß des Rückgangs der Farbtemperatur D65 in K nach Bestrahlung für eine gewisse Zeit. Die Bestrahlung wurde mit einer 300W Xenon-Hochdruck-Kurzbogenlampe durchgeführt. Es ist ersichtlich, dass die Solarisation stets so gering war, dass der Rückgang der Farbtemperatur niemals die Grenze von 150 K erreicht hat. Wie oben erwähnt ist ein Rückgang der Farbtemperatur ab etwa 150 K mit bloßem Auge wahrnehmbar. Das verwendete Glas hatte die Zusammensetzung des Beispielglases 8.

Größere Mengen an SnO₂ führten zu keiner weiteren Verbesserung der Solarisationsbeständigkeit. Vielmehr gibt es ein Optimum hinsichtlich Solarisationsverhalten und ein Optimum hinsichtlich der Läuterwirkung. Diese beiden Optima sind nicht identisch, so dass ein Mittel gefunden werden musste zwischen guter Läuterung und geringerer Solarisation.

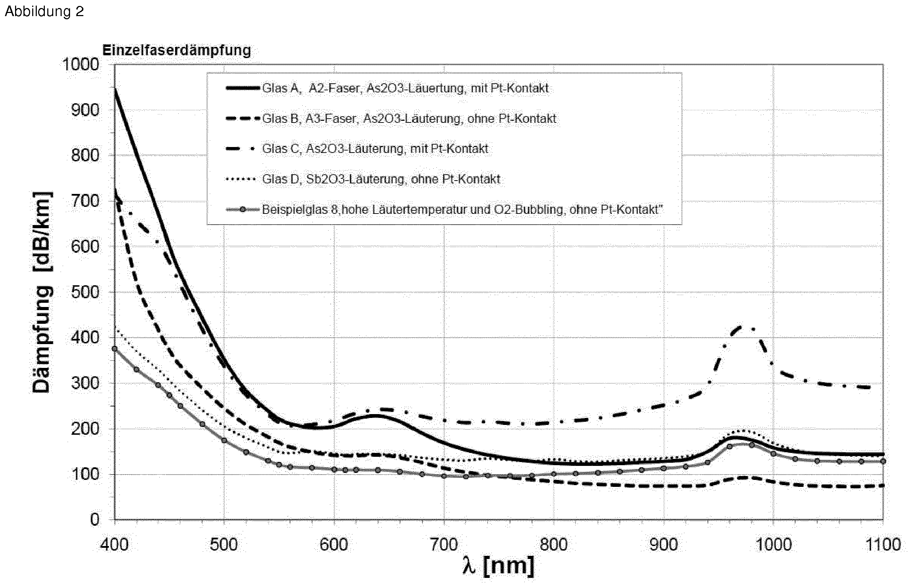

**Abbildung 2** zeigt das Dämpfungsspektrum verschiedener Gläser. Es ist erkennbar, dass sich die Gläser in zwei Bereichen hinsichtlich der Dämpfung unterscheiden, nämlich einerseits im Bereich kleiner Wellenlängen um 400 nm (Blaukante) und im Bereich um 920 bis 1100 nm.

Es ist erkennbar, dass herkömmliche Kerngläser, die PbO enthalten, durchaus gute Eigenschaften haben (Glas B). Gläser, die mit Platinkomponenten in Berührung gekommen sind, weisen starke Absorption im UV auf (Glas A).

Die Gläser A und B sind bleihaltige Fasergläser. Diese schaffen mit As₂O₃-Läuterung sehr wohl gute IR-Dämpfungswerte. Sie haben allerdings hohe Dämpfungswerte im UV, wenn in konventioneller Wanne, bestehend aus Quarzalbecken, Pt-Läuterkammer und Homogenisierungssystem, (Glas A) gefertigt wurde, d.h. diese Gläser hatten während der Fertigung Platinkontakt.

Das Glas B ist ebenfalls ein Bleiglas, das im Kieselglastiegel gefertigt wurde und deshalb keinen Kontakt zu Platin hatte.

Glas C ist ein bleifreies Faserglas in der konventionellen Wanne geschmolzen und mit As₂O₃ geläutert. As₂O₃ läutert bei niedrigeren Temperaturen als SnO₂ und begünstigt die Redoxverhältnisse im Glas, so dass auch im IR gute Dämpfungswerte erreicht werden. Es ist jedoch wegen seiner Toxizität und der verursachten Solarisationseffekte (hier nicht gezeigt) unerwünscht.

Glas D ist ebenfalls ein bleifreies Glas mit Sb₂O₃-Läuertung gefertigt in einem Kieselglastiegel ohne Platinkontakt. Die Dämpfungswerte dieses Glases sind sowohl im UV als auch im IR sehr gut. Allerdings ist auch das Sb₂O₃ unerwünscht aufgrund seiner Toxizität und der nachweislich verursachten Solarisation (hier nicht gezeigt).

Beispielglas 8 ist das erfindungsgemäße Glas mit SnO₂-Läuterung. Es wurde nach dem Läutern mit Sauerstoff gebubbelt. Die Dämpfungswerte dieses Glases sind sowohl im UV als auch im IR sehr gut.

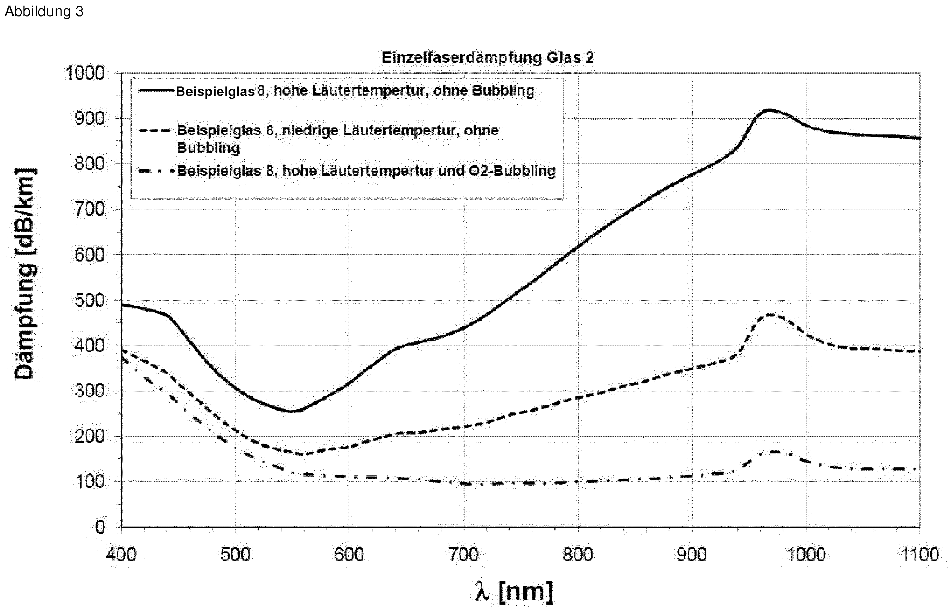

**Abbildung 3** zeigt sehr schön, wie stark der Effekt des Bubbelns nach dem Läutern ausgeprägt ist. Es ist gut zu erkennen, dass die Dämpfung durch eine Erhöhung der Läutertemperatur extrem stark ansteigt. Erfindungsgemäß muss allerdings bei hohen Temperaturen geläutert werden. Durch Bubbling nach dem Läutern wird die Dämpfung sogar so stark verbessert, dass bessere Werte erreicht werden als beim Läutern bei niedriger Temperatur.

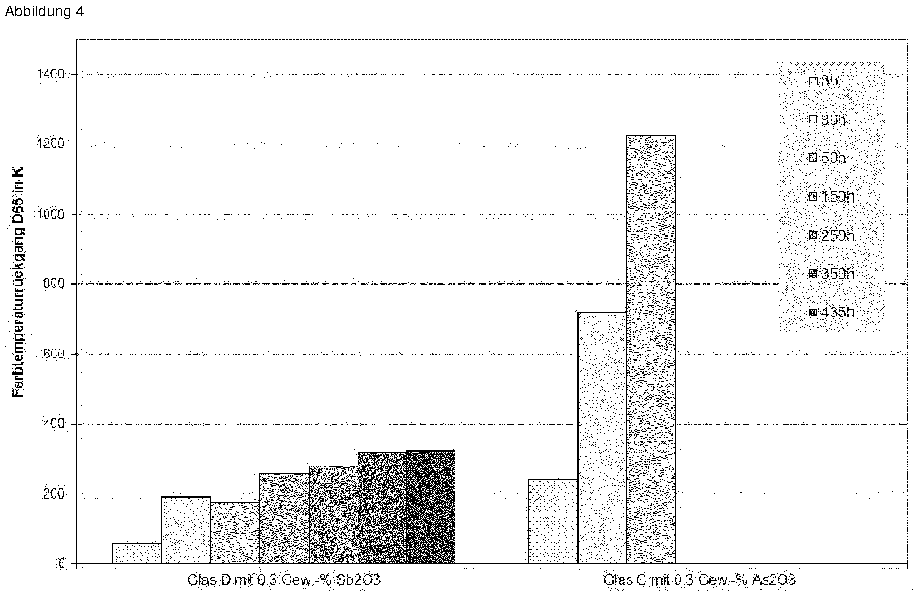

**Abbildung 4****:** Die einzelnen Balken zeigen das Ausmaß des Rückgangs der Farbtemperatur D65 in K nach Bestrahlung für eine gewisse Zeit für ein As₂O₃- und ein Sb₂O₃- geläutertes Glas. Die Bestrahlung wurde mit einer 300W Xenon-Hochdruck-Kurzbogenlampe durchgeführt. Die Lichtleiterlänge betrug 1 m. Bereits nach 3 h (beim As₂O₃- geläuterten Glas) bzw. nach 30 h (beim Sb₂O₃-geläuterten Glas) Bestrahlung beträgt der Wert für den Farbtemperaturrückgang >150 K und der Effekt verstärkt sich mindestens um den Faktor Zwei bei längerer Bestrahlungszeit als 3 h.

**Abbildung 5** zeigt das Dämpfungsspektrum eines Mangan-haltigen Glases (Bsp. 11) vor und nach Bestrahlung. Die durch bereits 3 h Bestrahlung mit einer 300W Xenon-Hochdruck-Kurzbogenlampe induzierte Bande bei ca. 550 nm lässt die Dämpfung in diesem Wellenlängenbereich auf größer 300 dB/km anwachsen.

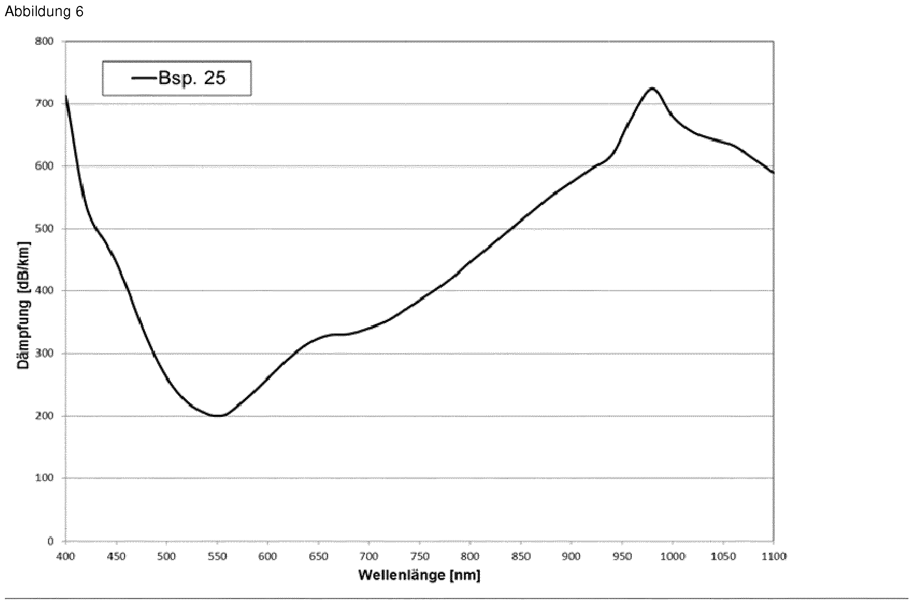

**Abbildung 6** zeigt das Dämpfungsspektrum des Beispielglases 25.

## Patentansprüche

1. Glas mit verbesserter Solarisationsbeständigkeit, das SnO₂ umfasst und bei einer Wellenlänge von 1050 nm eine Dämpfung von ≤1300 dB/km aufweist, wobei das Glas folgende Komponenten in Gew.-% umfasst
| | von | bis |
|---|---|---|
| B₂O₃ | 0 | 24 |
| SiO₂ | 23 | 62,1 |
| Al₂O₃ | 0 | 10 |
| Li₂O | 0 | 10 |
| Na₂O | 0 | 18,5 |
| K₂O | 0 | 25,7 |
| BaO | 0 | 57,8 |
| ZnO | 3 | 40 |
| La₂O₃ | 0 | 25 |
| ZrO₂ | 0 | 10 |
| HfO₂ | 0 | 14,2 |
| SnO₂ | >0 | 2 |
| MgO | 0 | 8 |
| CaO | 0 | 8 |
| SrO | 0 | 24,4 |
| Ta₂O₅ | 0 | 22 |
| Y₂O₃ | 0 | 11,9 |
| Rb₂O | 0 | 15 |
| Cs₂O | 0 | 21 |
| GeO₂ | 0 | 7,5 |
| F | 0 | 2 |
| Σ R₂O | 5 | 20 |
| Σ MgO, CaO, SrO, ZnO | 20 | 42 |

2. Glas nach Anspruch 1 mit einer Dämpfung von <400 dB/km bei einer Wellenlänge von 1050 nm.

3. Glas nach Anspruch 1 mit einer Dämpfung von 400 bis 1300 dB/km bei einer Wellenlänge von 1050 nm.

4. Glas nach einem der vorhergehenden Ansprüche, wobei das Glas Fe²⁺ und/oder Fe³⁺ in einem Gehalt von 0 bis 10 ppm umfasst.

5. Glas nach einem der Ansprüche 1 bis 4, wobei das Glas MnO in einer Konzentration von <200 ppb enthält.

6. Glas nach einem der Ansprüche 1 bis 4, wobei das Glas MnO in einer Konzentration von 200 bis 500 ppb enthält.

7. Glas nach einem der vorhergehenden Ansprüche, wobei das Glas frei von PbO ist.

8. Glas nach wenigstens einem der vorhergehenden Ansprüche mit einem Anteil von Sn²⁺ am Gesamtzinngehalt von höchstens 5%.

9. Glas nach wenigstens einem der vorhergehenden Ansprüche mit einem Gehalt an SnO₂ von wenigstens 0,01 und höchstens 1 Gew.-%.

10. Lichtleiter, umfassend ein Glas nach einem der Ansprüche 1 bis 9 als Kernglas, sowie ein Mantelglas, dass das Kernglas ummantelt.

11. Verwendung eines Glases nach wenigstens einem der Ansprüche 1 bis 9 als Kernglas in einem Lichtleiter.

## Claims

1. A glass having improved solarization resistance which comprises SnO₂ and at a wavelength of 1050 nm has an attenuation of ≤1300 dB/km, wherein the glass comprises the following components in % by weight
| | from | to |
|---|---|---|
| B₂O₃ | 0 | 24 |
| SiO₂ | 23 | 62.1 |
| Al₂O₃ | 0 | 10 |
| Li₂O | 0 | 10 |
| Na₂O | 0 | 18.5 |
| K₂O | 0 | 25.7 |
| BaO | 0 | 57.8 |
| ZnO | 3 | 40 |
| La₂O₃ | 0 | 25 |
| ZrO₂ | 0 | 10 |
| HfO₂ | 0 | 14.2 |
| SnO₂ | >0 | 2 |
| MgO | 0 | 8 |
| CaO | 0 | 8 |
| SrO | 0 | 24.4 |
| Ta₂O₅ | 0 | 22 |
| Y₂O₃ | 0 | 11.9 |
| Rb₂O | 0 | 15 |
| Cs₂O | 0 | 21 |
| GeO₂ | 0 | 7.5 |
| F | 0 | 2 |
| Σ R₂O | 5 | 20 |
| Σ MgO, CaO, SrO, ZnO | 20 | 42 |

2. The glass according to claim 1 having an attenuation of <400 dB/km at a wavelength of 1050 nm.

3. The glass according to claim 1 having an attenuation of 400 to 1300 dB/km at a wavelength of 1050 nm.

4. The glass according to one of the preceding claims, wherein the glass comprises Fe²⁺ and/or Fe³⁺ in a content of 0 to 10 ppm.

5. The glass according to one of claims 1 to 4, wherein the glass contains MnO in a concentration of <200 ppb.

6. The glass according to one of claims 1 to 4, wherein the glass contains MnO in a concentration of 200 to 500 ppb.

7. The glass according to one of the preceding claims, wherein the glass is free of PbO.

8. The glass according to at least one of the preceding claims having a proportion of Sn²⁺ of at most 5 % based on the total content of tin.

9. The glass according to at least one of the preceding claims having a content of SnO₂ of at least 0.01 and at most 1 % by weight.

10. A light guide comprising a glass according to one of claims 1 to 9 as core glass as well as a cladding glass sheathing the core glass.

11. A use of a glass according to at least one of claims 1 to 9 as core glass in a light guide.

## Revendications

1. Verre ayant une résistance à la solarisation améliorée comprenant Sn02 et ayant une atténuation de <1300 dB/km à une longueur d'onde de 1050 nm, ledit verre comprenant les composants suivants en pourcentage en poids
| | de | à |
|---|---|---|
| B203 | 0 | 24 |
| SiO₂ | 23 | 62,1 |
| Al2O3 | 0 | 10 |
| Li₂O | 0 | 10 |
| NaaO | 0 | 18,5 |
| K2O | 0 | 25,7 |
| BaO | 0 | 57,8 |
| ZnO | 3 | 40 |
| La₂O₃ | 0 | 25 |
| ZrO₂ | 0 | 10 |
| HfOa | 0 | 14,2 |
| SnO₂ | >0 | 2 |
| MgO | 0 | 8 |
| CaO | 0 | 8 |
| SrO | 0 | 24,4 |
| Ta2O5 | 0 | 22 |
| Y₂O₃ | 0 | 11,9 |
| Rb2O | 0 | 15 |
| CS2O | 0 | 21 |
| Ge02 | 0 | 7,5 |
| F | 0 | 2 |
| Σ R₂o | 5 | 20 |
| Σ MgO, CaO, SrO, ZnO | 20 | 42 |

2. Verre selon la revendication 1 avec une atténuation de <400 dB/km à une longueur d'onde de 1050 nm.

3. Verre selon la revendication 1 avec une atténuation de 400 à 1300 dB /km à une longueur d'onde de 1050 nm.

4. Verre selon l'une des revendications précédentes, dans lequel le verre comprend du Fe²⁺ et/ou du Fe³⁺ en une teneur de 0 à 10 ppm.

5. Verre selon l'une des revendications 1 à 4, dans lequel ledit verre comprend du MnO à une concentration de <200 ppb.

6. Verre selon l'une des revendications 1 à 4, dans lequel le verre contient du MnO à une concentration de 200 à 500 ppb.

7. Verre selon l'une des revendications précédentes, ledit verre étant dépourvu de PbO.

8. Verre selon au moins une des revendications précédentes avec une teneur en Sn²⁺ de 5 % au maximum de la teneur totale en étain.

9. Verre selon au moins une des revendications précédentes avec une teneur en Sn02 d'au moins 0,01 et d'au plus 1 % en poids.

10. Fibre optique comprenant un verre selon l'une quelconque des revendications 1 à 9 comme verre de cœur, et un verre de revêtement recouvrant le verre de cœur.

11. Utilisation d'un verre selon au moins l'une des revendications 1 à 9 comme verre de cœur dans une fibre optique
